# EUROPÄISCHE PATENTSCHRIFT

(11) **EP 2 689 865 B1**
(45) Veröffentlichungstag und Bekanntmachung des Hinweises auf die Patenterteilung: **14.09.2016**
(21) Anmeldenummer: 12178365.8
(22) Anmeldetag: 27.07.2012
(51) Int. Cl.: B21D 39/02

(54) **Bördelpresse**
Hemming press
Presse à border

(43) Veröffentlichungstag der Anmeldung: 29.01.2014
(73) Patentinhaber: FFT Produktionssysteme GmbH & Co. KG, 36041 Fulda (DE)
(72) Erfinder: Schaafhausen, Wilfried, 88045 Friedrichshafen (DE); Grohmann, Jürgen, 88719 Stetten (DE); Motzkau, Günter, 88045 Friedrichshafen (DE); Ziegler, Felix, 88048 Friedrichshafen (DE)
(74) Vertreter: Schwabe - Sandmair - Marx

(56) Entgegenhaltungen:
- DE-A1-102009 059 676
- US-A1- 2004 107 559
- US-A1- 2009 038 361
- US-A1- 2011 048 094

## Beschreibung

Die Erfindung betrifft eine Bördelpresse zum Umlegen eines Flansches eines Bauteils, vorzugsweise eines Fahrzeugteils wie etwa einer Fahrzeugtür. Insbesondere kann es sich um eine Bördelpresse zur Herstellung einer Falzverbindung handeln. Die Bördelpresse ist in solchen Verwendungen eine Falzpresse. Grundsätzlich kann sie jedoch auch dazu verwendet werden, einen Flansch nur ganz oder teilweise umzulegen ohne einen Fügeprozess auszuführen. Sie kommt vorzugsweise in der Serienproduktion von Fahrzeugteilen zum Einsatz.

Aus der DE 10 2009 059 676 A1 ist eine stationär angeordnete Bördelpresse bekannt, mit der Bleche durch Falzen fest miteinander verbunden werden. Die Bördelpresse weist eine stationäre Basisstruktur mit einem Bördelbett und eine Bördelformeinheit zum Umlegen eines Bauteilflansches auf. An der Bördelformeinheit ist eine Bördelform, die beim Bördeln gegen den Flansch drückt, parallel zu einer beim Bördeln auszuübenden Presskraft beweglich angeordnet. Die Bördelformeinheit ist mit der Bördelform gemeinsam quer zur Pressrichtung beweglich auf der Basisstruktur gelagert. Bestandteil der Bördelpresse ist ferner ein Niederhalter, der das Bauteil beim Bördeln niederhält und dadurch am Bördelbett fixiert. Gebördelt wird in mehreren Schritten, beispielsweise einem Vor- und einem Fertigbördelschritt. Zwischen den Bördelschritten wird der Niederhalter vom Bauteil abgehoben und für den nächsten Schritt wieder abgesenkt.

Derartige Bördel- bzw. Falzpressen benötigen große Aufstellflächen, die in Produktionsanlagen aufgrund beengter Platzverhältnisse oftmals nicht oder nur an produktionstechnisch suboptimalen Orten zur Verfügung stehen.

Dan Dokument US 2011/048094 offenbart eine Bördelpresse gemäß dem Oberbegriff des Anspruchs 1.

Es ist eine Aufgabe der Erfindung, eine Bördelpresse zu schaffen, die für eine Anordnung in Produktionsanlagen mit beengten Platzverhältnissen, insbesondere hinsichtlich der verfügbaren Stellflächen, besser geeignet ist.

Die Erfindung geht von einer stationär angeordneten Bördelpresse zum Umlegen eines Flansches eines Bauteils aus, die eine Basisstruktur mit einem Bördelbett und eine Bördelformeinheit mit einer Bördelform, vorzugsweise mehreren Bördelformen, zum Umlegen des Flansches aufweist. Beim Umlegen des Flansches wird das Bauteil in eine Pressrichtung in das Bördelbett gepresst. Das Bördelbett weist entsprechend eine gegen die Pressrichtung gewandte Auflage für das Bauteil auf. Die Bördelpresse umfasst ferner einen Pressantrieb zur Erzeugung einer zum Umlegen des Flansches erforderlichen Presskraft. Bördelbett und Bördelform sind mittels des Pressantriebs relativ zueinander in Pressrichtung beweglich, um die Presskraft ausüben zu können. Grundsätzlich sind Ausführungen realisierbar, in denen sowohl die Bördelform als auch das Bördelbett relativ zur Umgebung der Bördelpresse in Pressrichtung beweglich sind, um die für das Umlegen des Flansches erforderliche Relativbeweglichkeit zu erhalten. Es sind auch Ausführungen realisierbar, in denen nur das Bördelbett relativ zur Umgebung beweglich ist. In anderen Ausführungen ist die Bördelform und bei mehreren Bördelformen sind diese mehreren Bördelformen relativ zur Umgebung und damit relativ zum Bördelbett beweglich, um den Flansch umlegen zu können, während das Bördelbett unbeweglich ist.

Nach der Erfindung sind die Basisstruktur und die Bördelformeinheit zumindest im Wesentlichen vertikal stehend aufgestellt oder in einem Gestell aufstellbar gelagert. In der zumindest im Wesentlichen vertikalen Ausrichtung von Basisstruktur und Bördelformeinheit weist das Bördelbett gegen die entsprechend zumindest im Wesentlichen horizontale Pressrichtung. Bei Bördelpressen weisen die Basisstruktur und die Bördelformeinheit im geschlossenen Zustand der Presse üblicherweise zusammen eine in Pressrichtung gemessene maximale Dicke auf, die deutlich kleiner als ihre quer zur Pressrichtung gemessene maximale Breite ist. Die Erfindung nutzt diesen Umstand zur Verringerung der zur Aufstellung der Bördelpresse erforderlichen Stellfläche, indem das Bördelbett nicht wie üblich liegend nach oben weisend, sondern zumindest im Wesentlichen vertikal stehend zur Seite weisend angeordnet ist oder durch eine bewegliche Lagerung in einem Gestell in diese Ausrichtung bewegt werden kann. In einer Draufsicht auf die Bördelpresse wird dadurch die Grundfläche eines die Bördelpresse umhüllenden Zylinders und in diesem Sinne die für die Aufstellung der Presse erforderliche Stellfläche verringert. Da die Bauteile nicht hängend, sondern jeweils in vertikaler Ausrichtung in die Bördelpresse eingelegt werden können, vereinfacht sich auch die Handhabung mit einem Roboter oder anderen Aktor. Bei stehend ausgerichteter Bördelpresse können Arbeiten am Bördelbett oder der Bördelform, wie etwa Reparatur- und Wartungsarbeiten oder ein Endbearbeiten entsprechend dem Anspruch 17, leichter, insbesondere ergonomisch günstiger durchgeführt werden.

Die Bördelpresse ist vorzugsweise dafür eingerichtet, flache Bauteile zu bördeln, also Bauteile, die eine in Pressrichtung gemessene maximale Tiefe aufweisen, die kleiner als ihre quer zur Pressrichtung gemessene Länge oder Breite ist. Typische Beispiele sind Fahrzeugteile, insbesondere Fahrzeuganbauteile wie etwa Fahrzeugtüren, Schiebedächer, Motorhauben und Heckklappen, aber auch Karosserieteile wie etwa eine Fahrzeugseitenwand, ein Schweller oder ein Kotflügel.

Die Bördelform ist an der Bördelformeinheit angeordnet. Die Bördelformeinheit kann zwar grundsätzlich die Bördelform in einem Stück mit bilden, bevorzugter umfasst die Bördelformeinheit jedoch eine Trägerstruktur, und die Bördelform ist separat gefertigt und an der Trägerstruktur montiert. Die Bördelform kann aus mehreren zu einer Einheit gefügten Teilen bestehen, zweckmäßigerweise handelt es sich jedoch um eine einstückig geformte Struktur. Die Bördelform ist in bevorzugten Ausführungen dem Verlauf des Flansches angepasst geformt. Sie kann daher beispielsweise einen zumindest abschnittsweise gekrümmten Verlauf aufweisen. Sie kann hierbei nur in einer Dimension oder auch zweidimensional gekrümmt sein. Für das Bördelbett gilt sinngemäß das Gleiche.

Um die zum Umlegen des Flansches erforderliche Relativbewegung von Bördelform und Bördelbett in Pressrichtung zu bewirken, kann die Bördelform zwar grundsätzlich in Pressrichtung beweglich an der Bördelformeinheit abgestützt sein, bevorzugt findet die Relativbewegung in Pressrichtung jedoch zwischen dem Bördelbett und der Bördelformeinheit statt. In derartigen Ausführungen sind das Bördelbett und die Bördelformeinheit mittels des Pressantriebs relativ zueinander in Pressrichtung beweglich, um die Presskraft auszuüben. Obgleich zum Erhalt der Relativbeweglichkeit von Bördelformeinheit und Bördelbett die Bördelformeinheit unabhängig von der Basisstruktur in oder an einem eigenen Gestell oder das Bördelbett unabhängig von der Bördelformeinheit in oder an einem Gestell der Basisstruktur relativ zur Umgebung beweglich gelagert sein kann oder jeweils sein können, wird Ausführungen der Vorzug gegeben, in denen die Bördelformeinheit an der Basisstruktur oder das Bördelbett an einer Stützstruktur in Pressrichtung beweglich gelagert ist. Das Wort "oder" wird hier wie stets von der Erfindung im üblichen logischen Sinne eines "inklusiv oder" verstanden, umfasst also sowohl die Bedeutung von "entweder ... oder" als auch die Bedeutung von "und", soweit sich aus dem jeweils konkreten Zusammenhang nicht ausschließlich nur eine dieser beiden Bedeutungen ergeben kann. In Bezug auf beispielsweise die bevorzugte Relativbeweglichkeit von Bördelbett und Bördelformeinheit bedeutet dies, dass in einer ersten Variante die Bördelformeinheit an der Basisstruktur in Pressrichtung beweglich gelagert und das Bördelbett relativ zur Umgebung unbeweglich ist, während in einer zweiten Variante das Bördelbett an der Stützstruktur relativ zur Bördelformeinheit beweglich gelagert und die Bördelformeinheit relativ zur Umgebung unbeweglich ist. In einer dritten Variante können die Bördelformeinheit an der Basisstruktur und das Bördelbett an einer Stützstruktur relativ zueinander und jeweils relativ zur Umgebung beweglich gelagert sein.

Zweckmäßig ist, wenn die Bördelformeinheit eine Trägerstruktur umfasst und die Bördelform relativ zur Trägerstruktur quer zur Pressrichtung beweglich ist. Die Bördelpresse umfasst in derartigen Ausführungen einen Bördelformantrieb, der mit der Bördelform gekoppelt ist, um die Bördelform relativ zur Trägerstruktur der Bördelformeinheit quer zur Pressrichtung zu bewegen. Dies ermöglicht Zu- und Abstellbewegungen der Bördelform, um das Bauteil einlegen oder den Flansch in beispielsweise zwei oder mehr Bördelschritten sequentiell um jeweils einen bestimmten Winkel umlegen zu können. Der Bördelformantrieb kann insbesondere an der Trägerstruktur der Bördelformeinheit angeordnet sein.

Die Bördelform macht in allen genannten Varianten die Relativbewegung der Bördelformeinheit, den Presshub und den Rückhub, mit. Die Bördelform kann daher an der Bördelformeinheit in Pressrichtung unbeweglich abgestützt sein, beispielsweise in einem Anschlagkontakt. Da die im Vergleich zur Bördelform größere und massivere Bördelformeinheit den Presshub ausführt und für Querhübe der Bördelform im Vergleich zur Presskraft nur geringe Kräfte aufzubringen sind, wird eine einfache, robuste Bördelformeinheit geschaffen.

Umfasst die Bördelpresse wie bevorzugt mehrere Bördelformen, sind diese jeweils Bestandteil der Bördelformeinheit. Wird mit der Bördelformeinheit nur ein einziger Bördelschritt ausgeführt, können die Bördelformen an der Bördelformeinheit unbeweglich angeordnet sein. Bevorzugter umfasst die Bördelformeinheit wie bereits erwähnt eine Trägerstruktur, an der die Bördelformen jeweils beweglich abgestützt sind. Zu der wenigstens einen Bördelform gemachte Ausführungen gelten vorzugsweise gleichermaßen für jede optionale weitere Bördelform der Bördelformeinheit. Der Bördelformantrieb umfasst vorteilhafterweise mehrere fluidisch, bevorzugt pneumatisch, oder elektrisch betriebene Antriebseinheiten, nämlich für die beweglichen Bördelformen jeweils eine eigene Antriebseinheit, die nur mit der zugeordneten Bördelform gekoppelt ist. Die Verwendung mehrerer Bördelformen ist insbesondere dann von Vorteil, wenn der umzulegende Flansch in einer in Pressrichtung gesehenen Draufsicht auf das Bauteil nicht einfach gerade ist, sondern wenigstens zwei Flanschabschnitte aufweist, die nicht auf einer gemeinsamen geraden Linie liegen. So kann der Flansch in der Draufsicht gesehen einen gekrümmten oder polygonalen Verlauf aufweisen, oder es muss an unterschiedlichen Seiten eines Bauteilrands gebördelt werden. Dies ist bei den bereits genannten Bauteilbeispielen wie etwa einer Fahrzeugtür oder Heckklappe typischerweise der Fall. Der Flansch kann beispielsweise in der Draufsicht gesehen um einen zentralen Bereich des Bauteils umlaufen, vollständig oder teilweise, gegebenenfalls auch abschnittsweise unterbrochen sein. Um einen derartigen Flansch in mehreren Bördelschritten um jeweils einen bestimmten Winkel mit der gleichen Bördelformeinheit umlegen zu können, umfasst die Bördelformeinheit wie gesagt in bevorzugten Ausführungen mehrere relativ zu einer Trägerstruktur der Bördelformeinheit und auch relativ zueinander quer zur Pressrichtung bewegliche Bördelformen, die an der Trägerstruktur dem Verlauf des umzulegenden Flansches folgend angeordnet sind.

Für die Relativbeweglichkeit von Bördelformeinheit und Bördelbett ist vorteilhaft, wenn an der Basisstruktur ein in Pressrichtung erstrecktes Führungselement und an der Bördelformeinheit ein in Pressrichtung erstrecktes Führungsgegenelement vorgesehen ist und die Basisstruktur und die Bördelformeinheit mittels eines Führungseingriffs von Führungs- und Führungsgegenelement beim Presshub und Rückhub in Pressrichtung relativ zueinander geführt werden. Die Relativbewegung kann insbesondere eine Linearbewegung sein. Das Führungselement und das Führungsgegenelement können sich entsprechend jeweils in Pressrichtung gerade erstrecken. Ist die Bördelformeinheit im Führungseingriff von Führungselement und Führungsgegenelement an der Basisstruktur gelagert, wird ihr Gewicht zumindest zu einem überwiegenden Teil im Führungseingriff vom Führungselement aufgenommen. Führt das Bördelbett eine Pressbewegung aus, kann das Bördelbett im Führungseingriff von Führungs- und Führungsgegenelement am Führungsgegenelement der Bördelformeinheit oder einem Führungsgegenelement der genannten Stützstruktur gelagert sein, so dass zumindest ein Teil des Gewichts des Bördelbetts an der Bördelformeinheit oder der Stützstruktur abgestützt wird. Bevorzugt sind in der erläuterten Weise mehrere Führungselemente und Führungsgegenelemente um das Bördelbett verteilt angeordnet, die jeweils paarweise miteinander in einem Führungseingriff sind, um die Bördelformeinheit oder das Bördelbett bei der Pressbewegung in Pressrichtung zu führen.

Um das Bauteil beim Bördeln im Bördelbett nieder zu halten, kann ein Niederhalter vorgesehen sein, der wie üblich nur die Funktion des Niederhaltens ausübt. Vorteilhafter ist allerdings ein Niederhalter, der nicht nur diese Funktion ausüben kann, sondern eine Befestigungseinrichtung für die Befestigung an einem im Raum beweglichen Aktor, wie etwa ein Roboterarm eines Industrieroboters, und eine Halteeinrichtung zum Halten des Bauteils aufweist, beispielsweise einen pneumatischen Sauger oder mechanischen Greifer. Das Bauteil kann mittels solch eines Niederhalters zur Bördelpresse bewegt, in das Bördelbett gelegt und beim Bördeln im Bördelbett nieder gehalten werden. Vorteilhafterweise kann es auch mittels des Niederhalters wieder aus dem Bördelbett genommen werden. Der Niederhalter kann in derartigen Anführungen nacheinander mehrere Bauteile aufnehmen, halten, im Bördelbett positionieren, niederhalten und optional auch wieder aus dem Bördelbett nehmen und ablegen, um anschließend das nächste Bauteil aufnehmen zu können. Er kann während dieser Tätigkeiten am Aktor verbleiben. Der Niederhalter ist somit auch Einlegewerkzeug, bevorzugt auch noch Aufnahme- oder Greifwerkzeug, indem er ein zu bördelndes Bauteil aufnehmen kann. Er kann auch noch Ablagewerkzeug sein, indem er das gebördelte Bauteil aus der Bördelpresse nimmt und in einer Bauteilablage für gegebenenfalls eine weitere Bearbeitung oder eine Montage ablegt.

Ein derartiger Niederhalter, insbesondere die Halteeinrichtung, kann dafür eingerichtet sein, geschachtelte Teile eines zu fügenden Bauteils, wie etwa ein Außenteil und ein Innenteil einer Fahrzeugtür oder Heckklappe oder eines Schiebedachs, aufzunehmen und im geschachtelten Zustand in das Bördelbett einzulegen. Der Niederhalter, insbesondere die Halteeinrichtung, kann auch dafür eingerichtet sein, die zu schachtelnden Teile solch eines Bauteils einzeln aufzunehmen und nacheinander in das Bördelbett bzw. die Bördelpresse einzulegen und erst in der Bördelpresse zu schachteln. Dies ist beispielsweise vorteilhaft, wenn im Bereich der Bördelpresse keine Schachtelstation vorhanden ist, möglicherweise aus Platzgründen gar nicht angeordnet werden kann. Schließlich kann der Niederhalter, insbesondere die Halteeinrichtung, auch dafür eingerichtet sein, wahlweise entweder die Teile derartiger Bauteile einzeln aufzunehmen und in der Presse zu schachteln oder aber die Teile im bereits geschachtelten Zustand gemeinsam aufzunehmen und einzulegen. Für beide Verfahrensweisen ist von Vorteil, wenn die Halteeinrichtung einen oder mehrere Sauger oder einen oder mehrere mechanische Greifer aufweist, mit dem oder denen eines der Einzelteile eines Schachtelverbunds mittels Zugkraft gegen ein anderes Einzelteil des Schachtelverbunds gezogen und dadurch an dieses andere Einzelteil angelegt werden kann. Dieses andere Einzelteil kann dabei beispielsweise an einem Niederhalterand des Niederhalters abgestützt oder mit einem oder mehreren anderen Greifern, beispielsweise einem oder mehreren Saugern oder einem oder mehreren mechanischen Greifern, gehalten werden.

In bevorzugten Ausführungen wird ein zum Einlegen verwendbarer Niederhalter beim Einlegen relativ zum Bördelbett geführt. Dies kann zwar grundsätzlich der Aktor besorgen, bevorzugter wird der Aktor jedoch von dieser Aufgabe entlastet und der Niederhalter direkt geführt. So kann die Bördelformeinheit oder die Basisstruktur ein Führungselement und der Niederhalter ein Führungsgegenelement aufweisen, um den Niederhalter beim Einlegen des Bauteils in einem Führungseingriff dieses Führungselements und des Führungsgegenelements des Niederhalters relativ zum Bördelbett zu führen, bis das Bauteil im Bördelbett liegt. Bevorzugt wird der Niederhalter in Pressrichtung geführt. Die Führung kann eine Linearführung sein. Das Führungselement für den Niederhalter kann insbesondere das bereits erläuterte Führungselement für die Bördelformeinheit sein, das dann in doppelter Führungsfunktion zum einen die Bördelformeinheit beim Presshub und zum anderen den Niederhalter beim Einlegen führt. Ein Führungselement für den Niederhalter kann aber auch zusätzlich zu einem Führungselement für die Bördelformeinheit vorgesehen sein. Bevorzugt weist der Niederhalter mehrere Führungsgegenelemente auf, mit denen er beim Einlegen des Bauteils jeweils in einem Führungseingriff mit einem zugeordneten Führungselement der Basisstruktur oder der Bördelformeinheit ist.

Die Basisstruktur oder die Bördelformeinheit kann ein Spannelement und der Niederhalter ein Spanngegenelement aufweisen, die miteinander in einen Spanneingriff bringbar sind, um den Niederhalter zum Niederhalten des Bauteils im Spanneingriff relativ zum Bördelbett in Pressrichtung zu spannen. Hierdurch wird der Aktor, vorzugsweise ein Arm eines Roboters wie etwa eines üblichen Industrieroboters, entlastet. Dies kann soweit gehen, dass der Aktor vom Niederhalter gelöst werden kann, also für das Niederhalten nicht benötigt wird und zur Erfüllung einer anderen Funktion zur Verfügung steht. Bevorzugt weist die Basisstruktur oder die Bördelformeinheit mehrere Spannelemente und der Niederhalter mehrere Spanngegenelemente auf, die jeweils paarweise in einen Spanneingriff gebracht werden können, um im jeweiligen Spanneingriff den Niederhalter relativ zum Bördelbett in Pressrichtung zu spannen. Die mehreren Spannelemente sind vorzugsweise längs des Bördelbetts oder der einen oder mehreren Bördelformen verteilt angeordnet, um durch den Spanneingriff eine längs des Bördelbetts gleichmäßige Niederhaltekraft zu erzeugen. Das oder die Spannelemente kann oder können vorteilhafterweise an dem wenigstens einen oder an den mehreren Führungselementen angeordnet, grundsätzlich aber auch separat davon vorgesehen sein. Zweckmäßig ist eine Anordnung in einem Bereich des jeweiligen Führungselements vom Bördelbett aus gesehen hinter der Bördelform. Spannelement und Spanngegenelement können insbesondere so geformt sein, dass eine in Pressrichtung wirkende Spannkraft und somit die Niederhaltekraft des Niederhalters im Spanneingriff durch Keilwirkung erzeugt wird. So kann der Spanneingriff beispielsweise in der Art eines Schraubeingriffs gebildet sein, indem das oder die Spannelemente mit dem oder den Spanngegenelementen jeweils wie Schraube und Mutter zusammenwirken, wobei eines aus Spannelement und Spanngegenelement um eine Drehachse gegen die Pressrichtung ansteigt, vergleichbar einem Gewindegang, und das andere aus Spannelement und Spanngegenelement auf der ansteigenden Fläche oder Linie gleitet, wenn das Spannelement und das zugeordnete Spanngegenelement relativ zueinander um diese Drehachse verdreht werden.

Ist die Bördelpresse dafür eingerichtet, den Flansch in zwei oder mehr Bördelschritten umzulegen, kann zusätzlich zur Bördelform eine weitere Bördelform so vorgesehen sein, dass eine dieser zwei Bördelformen einen der Bördelschritte und die andere Bördelform einen anderen der Bördelschritte ausführt. Die eine Bördelform kann eine Vorbördelform zum Vorbördeln und die andere eine Fertigbördelform zum Fertigbördeln sein. Bevorzugter sind jedoch die Bördelformeinheit und die Bördelform dafür eingerichtet, mehrere Bördelschritte nacheinander auszuführen. Die Bördelform weist zu diesem Zweck eine erste Bördelfläche zum Umlegen des Flansches um einen ersten Winkel und eine weitere, zweite Bördelfläche zum Umlegen des Flansches um einen weiteren Winkel auf. Die erste Bördelfläche ragt quer zur Pressrichtung und zum Flansch über die zweite Bördelfläche hinaus.

Der Niederhalter kann zwischen zwei am gleichen Bauteil ausgeführten Bördelschritten vom Bauteil abgehoben werden. Hierdurch geht jedoch die Fixierung am Bördelbett verloren, oder es muss anderweitig für eine Fixierung des Bauteils gesorgt werden.

In bevorzugten Ausführungen sind die Bördelform und ein Niederhalter so geformt, dass mit der gleichen Bördelform nacheinander wenigstens zwei Bördelschritte, vorzugsweise unter Einschluss eines Fertigbördelschritts ausgeführt werden können, der Niederhalter aber dennoch über beide Bördelschritte hinweg ständig in der gleichen Niederhalteposition verbleiben kann, auch zwischen den wenigstens zwei Schritten. Der Niederhalter und die Bördelform sind so geformt, dass die Bördelform bei zumindest einem der Bördelschritte den Niederhalter quer zur Pressrichtung und quer zum Flansch überlappen kann. Der Niederhalter weist einen Niederhalterand zum Kontaktieren des Bauteils und einen an den Niederhalterand grenzenden Bereich auf. Bevorzugt ist der Niederhalter in dem Bereich, der an den Niederhalterand grenzt, also vom Flansch aus gesehen hinter dem Niederhalterand gelegen ist, so geformt, dass die Bördelform den Niederhalterand überlappen, diesen also beim Bördeln übergreifen kann, während der Niederhalterand auch im überlappten Randabschnitt das Bauteil im Bördelbett niederhält.

Der Niederhalter oder die Bördelform kann oder können jeweils so geformt sein, dass sie im überlappenden Zustand ineinandergreifen oder einander durchgreifen, beispielsweise kammartig, oder die Bördelform den Niederhalter nur übergreift. Der Niederhalter kann in dem an den Niederhalterand grenzenden Bereich einen quer zur Pressrichtung und dem Flansch vorstehenden und einen quer zur Pressrichtung und dem Flansch zurückstehenden Bereich und die Bördelform ebenfalls einen quer zur Pressrichtung und dem Flansch vorstehenden und einen quer zur Pressrichtung und dem Flansch zurückstehenden Bereich aufweisen, so dass die Bördelform und der Niederhalter beim Bördeln quer zur Pressrichtung und zum Flansch ineinander greifen oder einander durchgreifen können. So kann der Niederhalter einen oder mehrere Durchgänge aufweisen und die Bördelform den Niederhalter, vorzugsweise nur in dem an den Niederhalterand grenzenden Bereich, durchgreifen, beispielsweise kammartig mit mehreren Abschnitten gleichzeitig. Der Niederhalter kann der Bördelform zugewandt stattdessen auch eine oder mehrere Taschen aufweisen, ebenfalls bevorzugt nur in dem an den Niederhalterand grenzenden Bereich, und die Bördelform in die Tasche(n) nur eingreifen. Der Niederhalter kann einen oder mehrere Durchgänge auch neben einer oder mehreren Taschen aufweisen. Um die Überlappbarkeit zu erhalten, kann der Niederhalter anstatt oder zusätzlich zu einem oder mehreren Durchgängen oder einer oder mehreren Taschen in dem an den Niederhalterand grenzenden Bereich von der Bördelform weggekröpft sein, so dass die Bördelform den Niederhalterand beim Bördeln an seiner Rückseite überlappen, also übergreifen kann.

Die Bördelformeinheit kann einen Durchgang aufweisen, der sich in Pressrichtung durch die Bördelformeinheit erstreckt und durch den das Bauteil von einer dem Bördelbett abgewandten Rückseite der Bördelformeinheit aus in das Bördelbett eingelegt werden kann, vorzugsweise mittels des Niederhalters. Von Vorteil ist solch eine Ausgestaltung insbesondere für Bauteile, die an einem äußeren Rand umlaufend oder zumindest an mehreren Seiten gebördelt werden. Bördelformeinheit und Bördelbett können auch beim Bördeln solcher Bauteile, wie zu bevorzugten Ausführungen erläutert, relativ zueinander die Pressbewegung ausführen, in allen anderen Freiheitsgraden der Bewegung aber über eine Serie von Bauteilen gesehen unbeweglich miteinander verbunden sein.

Die Bördelform oder mehrere an der Bördelformeinheit angeordnete Bördelformen kann oder können sich längs eines Rands der Bördelformeinheit erstrecken und den Durchgang seitlich begrenzen. Wenn das Bauteil positioniert im Bördelbett liegt und niedergehalten wird, kann die Bördelform oder können die mehreren Bördelformen quer zur Pressrichtung über den Flansch und anschließend in Pressrichtung gegen den Flansch bewegt werden, um diesen umzulegen. Die Bördelform oder die mehreren Bördelformen kann oder können gemeinsam vorteilhafterweise quer zur Pressrichtung relativ zu einer den Durchgang aufweisenden Trägerstruktur der Bördelformeinheit nach innen, in Richtung auf einen zentralen Bereich des Durchgangs über einen Innenumfang der Trägerstruktur vorbewegt werden. Vorteilhaft ist, insbesondere für ein Fertigbördeln, wenn bei Anordnung mehrerer Bördelformen diese soweit nach innen über den inneren Umfangsrand der Trägerstruktur vorbewegt werden können, dass sie über die Länge des umzulegenden Flansches in der Draufsicht gesehen eine geschlossene, lückenlose Kontur bilden, mit der sie beim Bördeln gegen den Flansch drücken. Eine Trägerstruktur der Bördelformeinheit, an der die Bördelform(en) abgestützt ist oder sind, kann den Durchgang vollständig umrahmen. Die Trägerstruktur kann im Ganzen als Rahmen mit im Vergleich zum Durchgang schmaler Rahmenleiste geformt sein.

Der Pressantrieb kann ein pneumatischer, hydraulischer oder elektrischer Antrieb sein. Bei elektrischem Antrieb wird dessen Kraft bzw. Drehmoment vorzugsweise mittels eines Kniehebelmechanismus auf die den Presshub ausführende Pressenkomponente, vorzugsweise die Bördelformeinheit, übertragen. Ein hydraulischer Pressantrieb kann vorteilhafterweise direkt auf die zu bewegende Pressenkomponente einwirken und daher sehr kompakt ausgeführt werden. Es können insbesondere mehrere hydraulische Linearhubeinheiten längs des Bördelbetts bzw. längs des umzulegenden Flansches verteilt angeordnet sein. Alternativ kann ein fluidischer Pressantrieb einen mit Druckfluid, vorzugsweise Druckgas, beaufschlagbaren Balg umfassen, der bei Druckbeaufschlagung in Pressrichtung auf die Bördelformeinheit oder das Bördelbett wirkt und dadurch die Presskraft erzeugt. Der Balg kann an einer vom Bördelbett abgewandten Rückseite der Bördelformeinheit oder an einer von der Bördelform abgewandten Rückseite des Bördelbetts angeordnet sein. Er kann sich über die Länge des Bördelbetts erstrecken, so dass der Fluiddruck im Inneren des Balgs auf eine große Balgfläche wirkt. Daher kann auch ein mit Druckgas, vorzugsweise Druckluft, betriebener Druckbalg eine ausreichend große Presskraft rein fluidisch erzeugen, so dass er wie bevorzugt direkt auf das Bördelbett oder die Bördelform wirken, insbesondere unmittelbar an einer Rückseite des Bördelbetts oder der Bördelformeinheit angeordnet sein kann und es keiner Untersetzung durch ein Getriebe bedarf. Ein Druckbalg, der mit Druckluft betrieben werden kann, kann sehr einfach an eine von Hause aus in Produktionsanlagen vorhandene Druckluftversorgung angeschlossen werden, die typischerweise einen Druck von beispielsweise 6 oder 12 bar liefern. Es muss kein Aggregat eigens für den Pressantrieb bereitgestellt werden.

Der Bördelprozess kann in der Bördelpresse mit einem anderen Fügeprozess kombiniert werden, beispielsweise einem Schweiß- oder Lötprozess, insbesondere einem Punktschweißen. Steht ein ausreichend schlankes Fügewerkzeug für den anderen Fügeprozess zur Verfügung, wie etwa eine Schweißlanze, kann solch ein Fügewerkzeug im abgerückten bzw. eingefahrenen Zustand der Bördelform zwischen der Bördelform und dem quer zur Pressrichtung der Bördelform gegenüber liegenden Niederhalter in Richtung auf das Bördelbett bewegt und gegen den Flansch gedrückt werden, um im Druckkontakt eine beispielsweise stoffschlüssige Fügeverbindung zu schaffen. Auf diese Weise können beispielsweise geschachtelte Teile, die durch das Bördeln miteinander gefügt werden, zusätzlich zur so geschaffenen Falzverbindung auch noch stoffschlüssig relativ zueinander fixiert werden. In vielen Anwendungen drückt der Niederhalter bei einer aus mehreren Teilen geschachtelten Anordnung gegen ein Innenteil, das mit einem randseitigen Flansch in eine durch das Bördeln geschaffene Falztasche eines Außenteils ragt. Der Niederhalter kann daher vorteilhafterweise zu einer Schweißelektrode, vorzugsweise der Masseelektrode, weiterentwickelt sein, um den umgelegten Flansch mit dem in die Falztasche ragenden Innenteil zu verschweißen. Die Schweißelektrode und die Masseelektrode können jeweils von der gleichen Seite gegen das Bauteil drücken, die eine Elektrode gegen den umgelegten Flansch und die andere Elektrode gegen das in die Falztasche ragende Teil, um den Stromkreis zu schließen. Grundsätzlich kann beispielsweise auch das Bördelbett eine der beiden für das Schweißen erforderlichen Elektroden bilden, falls nicht der umgelegte Flansch verschweißt werden soll, sondern zwei im Bördelbett übereinander liegende Teile eines Bauteils. Grundsätzlich kann eine für das Schweißen erforderliche Masseelektrode aber auch zusätzlich vorgesehen sein und von außen zwischen Bördelform und Niederhalter in Pressrichtung bis in den Kontakt mit einem der durch Schweißen miteinander zu fügenden Teile bewegt wird. Eine Schweißelektrode kann alternativ zu beispielsweise einer extern zugeführten Schweißlanze auch Bestandteil der Bördelformeinheit sein. So kann die Schweißelektrode in die Bördelform integriert sein, vorzugsweise in Pressrichtung beweglich. Für beispielsweise solch ein zusätzliches stoffliches Fügen, wie etwa ein Löten oder Kleben oder insbesondere Schweißen, kann auch von Vorteil sein, wenn die Befestigungseinrichtung des Niederhalters ein Dockingport für ein automatisches An- und Abdocken an den und von dem Aktor ist. Wird der Niederhalter wie weiter oben erläutert mittels wenigstens eines Spannelements der Bördelformeinheit oder vorzugsweise der Basisstruktur und eines Spanngegenelements des Niederhalters in die Niederhalteposition gedrückt, also die zum Niederhalten erforderliche Niederhaltekraft im Spanneingriff erzeugt, kann der Aktor den im Spanneingriff befindlichen Niederhalter automatisch abdocken und ein Fügewerkzeug, wie etwa eine Schweißlanze stattdessen andocken, um den zusätzlichen Fügeprozess mit dem entsprechenden Fügewerkzeug durchzuführen. Nach Durchführung des zusätzlichen Fügeprozesses kann der Aktor oder ein anderer Aktor wieder am Niederhalter andocken, um diesen zusammen mit dem gebördelten Bauteil aus der Bördelpresse zu nehmen. Um ein Fügewerkzeug bis zum Bauteil bewegen zu können, kann der Niederhalter in einem oder mehreren Bereichen, in dem oder denen jeweils gefügt werden soll, eine Ausnehmung bzw. jeweils eine Ausnehmung aufweisen, um dem Fügewerkzeug den Zugang zur Fügestelle zu vereinfachen.

In einer Weiterentwicklung sind das Bördelbett und die Bördelformeinheit um eine zumindest im Wesentlichen horizontale Achse drehbar oder schwenkbar in einem Gestell gelagert, so dass Bördelbett und Bördelformeinheit zwischen der stehenden Position und einer liegenden Position, in der das Bördelbett nach oben weist, hin und her bewegt werden können. Vorzugsweise sind sie gemeinsam schwenkbar oder drehbar gelagert. Solch eine Lagerung kann beispielsweise in Anwendungen von Vorteil sein, in denen das Bauteil aus mehreren Teilen, etwa einem Außenteil und einem Innenteil einer Fahrzeugtür, durch Falzen und Kleben gefügt wird und im Fügebereich Kleber vorhanden ist. Der Betreiber der Bördelpresse kann bei Verwendung der schwenkbaren oder drehbaren Anordnung frei entscheiden, ob in der liegenden oder in der stehenden Ausrichtung gebördelt wird. In Zeiten der Nichtbenutzung kann er Bördelbett und Bördelformeinheit in die platzsparende stehende Ausrichtung bewegen.

Die Bördelform oder die mehreren Bördelformen kann oder können jeweils eine verschleißfeste keramische Oberfläche aufweisen, mit der sie beim Bördeln gegen den Flansch des Bauteils drückt oder drücken. Vorzugsweise besteht die jeweilige Bördelform aus einem keramischen Werkstoff. An der keramischen Oberfläche setzt sich kein oder zumindest weniger Schmutz als an metallenen Oberflächen an, insbesondere tritt kein Aufschweißeffekt auf.

In noch einer Weiterentwicklung umfasst die Bördelpresse ein weiteres, zweites Bördelbett und eine weitere, zweite Bördelformeinheit. Das zweite Bördelbett kann an der Basisstruktur oder einer optionalen zweiten Basisstruktur vorgesehen sein. In das zweite Bördelbett kann ein zweites Bauteil gelegt und zum Umlegen eines Flansches in eine der Pressrichtung entgegen gerichtete zweite Pressrichtung gepresst werden. Die zweite Bördelformeinheit ist dem zweiten Bördelbett zugewandt und umfasst wenigstens eine zweite Bördelform zum Umlegen des Flansches des zweiten Bauteils. Die beiden Bördelbetten sind in Pressrichtung zwischen den Bördelformeinheiten angeordnet. Die Bördelbetten und Bördelformeinheiten bilden zusammen eine Sandwichanordnung, in der die beiden Bördelbetten Rücken-an-Rücken angeordnet sind. Die wenigstens eine zweite Bördelform und das zweite Bördelbett sind mittels des Pressantriebs relativ zueinander in die zweite Pressrichtung beweglich, um eine Presskraft auch auf das zweite Bauteil ausüben zu können. Die Bördelbetten und Bördelformeinheiten sind bezogen auf eine senkrecht zur Pressrichtung weisende Ebene vorzugsweise zumindest im Wesentlichen spiegelbildlich zueinander angeordnet. Die Bördelpresse ist in dieser doppelten Ausführung insbesondere zum zeitgleichen Bördeln von der Größe und Gestalt nach ähnlichen Bauteilen geeignet, beispielsweise einer rechten und einer linken Fahrzeugtür. Die beiden zu einer Doppelpresse zusammengefassten Einfachbördelpressen können einander exakt entsprechen.

Vorzugsweise weist die zweite Bördelpresse die hier am Beispiel der ersten Bördelpresse erläuterten und beanspruchten Merkmale ebenfalls auf. Die beiden Einfachpressen können sich allerdings hinsichtlich der Geometrie, beispielsweise des Verlaufs der Bördelbetten und entsprechend der Kontur der Bördelformen voneinander unterscheiden, um beispielsweise mit der einen Bördelpresse eine rechte Fahrzeugtür und mit der anderen Bördelpresse eine linke Fahrzeugtür oder auch gleichzeitig Fahrzeugtüren von unterschiedlichen Kraftfahrzeugtypen oder andere Bauteile, die sich voneinander unterscheiden, gleichzeitig bördeln zu können. Die gleichzeitig in der Doppelpresse bördelbaren Bauteile sollten jedoch soweit gleich sein, dass die in den beiden Einfachpressen aufzubringenden Kräfte der Größe und Verteilung nach einander in etwa entsprechen.

Der Pressantrieb kann mit den beiden Bördelformeinheiten so verbunden, insbesondere in und gegen die Pressrichtung an den Bördelformen abgestützt sein, dass die eine als Abstützung für die andere dient. Der Pressantrieb wirkt in ersten Ausführungen in und gegen die Pressrichtung nur auf die Bördelformeinheiten und bewegt diese gegenläufig auseinander und beim Presshub aufeinander und dabei auf das jeweilige Bördelbett zu. Ist der Pressantrieb als Linearhubantreib gebildet, kann die Basisstruktur ein Hubelement des Antriebs in Pressrichtung führen, muss den Antrieb aber nicht in oder gegen die Pressrichtung abstützen.

Weist der Pressantrieb den Druckbalg auf, kann in einem zentralen Bereich solch einer Doppelpresse eine Stützstruktur angeordnet sein, an der sich an einer der Bördelformeinheit zugewandten Vorder- und einer der zweiten Bördelformeinheit zugewandten Rückseite jeweils ein Druckbalg abstützt. Die Bördelpresse weist vorzugsweise die genannte zweite Basisstruktur auf. Der eine Druckbalg wirkt auf die Basisstruktur, um deren Bördelbett gegen die Bördelformeinheit zu drücken. Der andere Druckbalg wirkt auf die zweite Basisstruktur um deren Bördelbett gegen die zweite Bördelformeinheit zu drücken.

Die Doppelpresse kann auch mit nur einem einzigen Druckbalg ausgestattet sein, der beispielsweise die beiden Bördelbetten oder stattdessen die beiden Bördelformeinheiten voneinander weg drückt, falls entweder die Bördelbetten Rücken-an-Rücken oder die Bördelformeinheiten Rücken-an-Rücken und dazwischen der Druckbalg angeordnet sind. Grundsätzlich kann ein für beide Einfachpressen gemeinsamer Druckbalg auch zwischen dem Bördelbett der einen Einfachpresse und der Bördelformeinheit der anderen Einfachpresse angeordnet sein und das Bördelbett der einen Einfachpresse in Richtung auf die Bördelformeinheit der einen Einfachpresse und die Bördelformeinheit der anderen Einfachpresse in Richtung auf das Bördelbett der anderen Einfachpresse bewegen. Die Abrückbewegung zum Öffnen der Einfachpressen kann beispielsweise elektromotorisch oder mittels einer mechanischen oder pneumatischen Federeinrichtung bewirkt werden. Die Anordnung von zwei Druckbälgen erlaubt allerdings eine Entkopplung der zwei Einfachpressen hinsichtlich der Pressbewegung, so dass die eine Einfachpresse betrieben werden kann, während die andere stillsteht oder die beiden Einfachpressen mit unterschiedlichen Taktzeiten oder -intervallen betrieben werden können.

Die Erfindung betrifft auch ein Verfahren zur Herstellung der Bördelpresse, bei dem die Basisstruktur mit wenigstens einem endbearbeiteten, d. h. in den für die Presse geforderten Toleranzen gefertigten Führungselement und die Bördelformeinheit mit wenigstens einem endbearbeiteten, d. h. in den für die Presse geforderten Toleranzen gefertigten Führungsgegenelement erstellt werden und die Bördelform an der Bördelformeinheit montiert wird. Die Basisstruktur und die Bördelformeinheit werden mit der montierten Bördelform durch einen Führungseingriff des Führungselements und des Führungsgegenelements relativ zueinander ausgerichtet. Die Bördelform oder das Bördelbett wird oder werden bei bestehendem Führungseingriff endbearbeitet. Da es sich bei dem Führungselement und dem Führungsgegenelement um die Strukturen handelt, die im späteren Betrieb der Presse in dem die Pressbewegung führenden Führungseingriff sind, können mit vom Führungselement abgesehen nur roh vorgeformter, gegebenenfalls roh vorbearbeiteter Basisstruktur und vom Führungsgegenelement abgesehen nur roh vorgeformter, gegebenenfalls roh vorbearbeiteter Bördelform das Bördelbett oder die Bördelform, vorzugsweise Bördelbett und Bördelform, im Führungseingriff des späteren Pressenbetriebs und daher auch relativ zueinander hochpräzise durch Endbearbeitung fertiggestellt werden. Auf ein aufwendiges Nachbearbeiten und Nachjustieren kann verzichtet werden, zumindest wird der für solche Arbeiten zu betreibende Aufwand erheblich reduziert.

In einer Weiterentwicklung wird auch der Niederhalter mit wenigstens einem endbearbeiteten Führungselement, im Bereich des Niederhalterands aber nur roh geformt, gegebenenfalls vorbearbeitet, bereitgestellt und erst im Führungseingriff mit einem oder mehreren Führungselementen der Basisstruktur oder der Bördelformeinheit, vorzugsweise dem oder den für die Bördelformeinheit vorgesehenen Führungselement(en) der Basisstruktur, endbearbeitet.

Vorteilhafte Merkmale werden auch in den Unteransprüchen und deren Kombinationen beschrieben.

Die in den einzelnen Unteransprüchen beschriebenen Merkmale werden zwar vorteilhafterweise zusammen mit dem Merkmal der stehenden Ausrichtung der Presse verwirklicht, sind aber auf eine derartige Bördelpresse nicht beschränkt. Die Anmelderin behält es sich vor, auf jedes der in den Unteransprüchen und auch auf jedes der in der Beschreibung oder den Figuren offenbarten Merkmale einen eigenen Anspruch zu richten, der die Merkmale (a) bis (d) des Anspruchs 1 und anstelle des Merkmals (e) wenigstens ein anderes Merkmal, beispielsweise wenigstens eines der in den Unteransprüchen offenbarten Merkmale enthält.

Nachfolgend werden Ausführungsbeispiele der Erfindung anhand von Figuren erläutert. An den Ausführungsbeispielen offenbar werdende Merkmale bilden jeweils einzeln und in jeder Merkmalskombination die Gegenstände der Ansprüche und auch die vorstehend beschriebenen Ausgestaltungen vorteilhaft weiter. Es zeigen:
- Figur 1: eine Bördelpresse in einem ersten Ausführungsbeispiel,
- Figur 2: die Bördelpresse in Hauptkomponenten aufgelöst,
- Figur 3: eine Basisstruktur der Bördelpresse,
- Figur 4: eine Bördelformeinheit der Bördelpresse,
- Figur 5: einen Teil der Bördelformeinheit,
- Figur 6: einen Niederhalter der Bördelpresse,
- Figur 7: die Bördelpresse mit Niederhalter, aber ohne Bördelformeinheit,
- Figur 8: eine Bördelform und einen Niederhalter einer ersten Variante,
- Figuren 9-16: einen Bördelprozess,
- Figur 17: eine Bördelform und einen Niederhalter einer zweiten Variante,
- Figur 18: die Bördelform und den Niederhalter der zweiten Variante,
- Figur 19: eine Bördelform und einen Niederhalter einer dritten Variante,
- Figur 20: die Bördelform und den Niederhalter der zweiten Variante,
- Figur 21: eine Bördelpresse in einem zweiten Ausführungsbeispiel,
- Figur 22: eine Bördelpresse in einem dritten Ausführungsbeispiel mit einem Druckbalg,
- Figur 23: den Druckbalg in einer Draufsicht und
- Figur 24: den Druckbalg in einer Seitensicht.

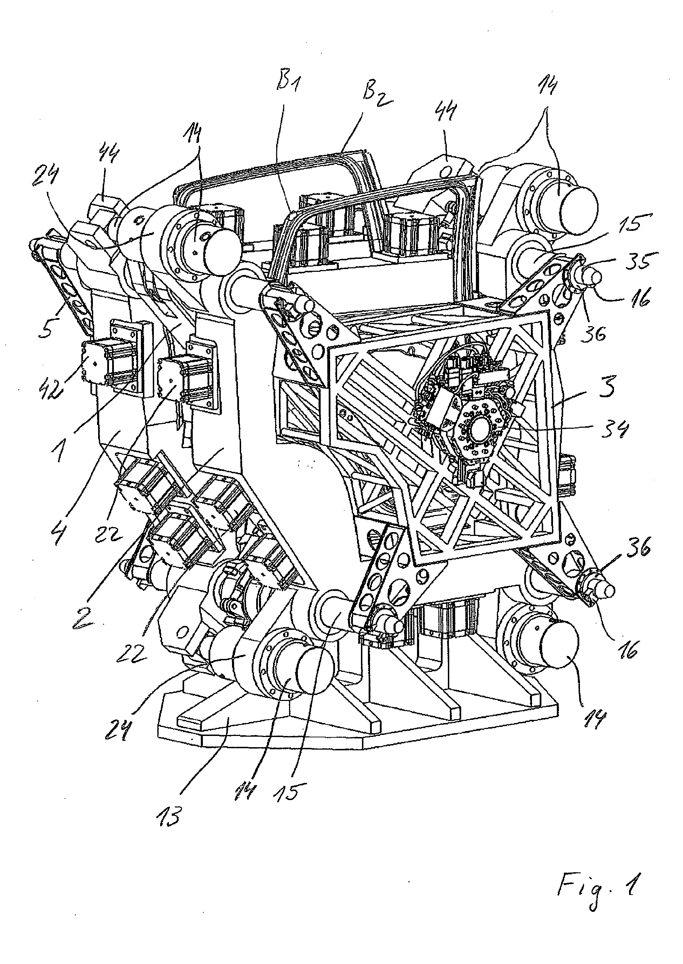

Figur 1 zeigt eine Bördelpresse eines ersten Ausführungsbeispiels. Die Bördelpresse ist als Doppelpresse ausgeführt, d. h. sie umfasst eine erste Bördelpresse und eine zweite Bördelpresse, die nebeneinander in einer Sandwichanordnung, Rücken-an-Rücken aufrecht stehend angeordnet sind. Die Presse ist in einer Produktionsanlage stationär angeordnet.

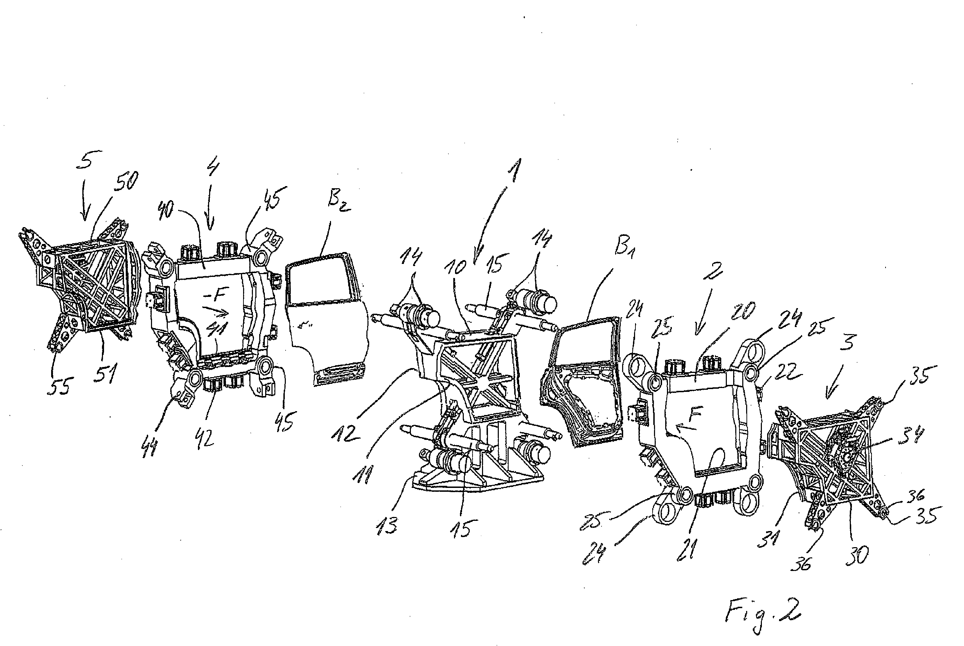

Die Bördelpresse ist in Figur 2 aufgelöst in ihre Hauptkomponenten dargestellt, wobei die Hauptkomponenten parallel zu einer Pressrichtung F aufgereiht sind. Bei diesen Hauptkomponenten handelt es sich um eine in Bezug auf die Pressrichtung F zentral angeordnete Basisstruktur 1, eine zur rechten Seite der Basisstruktur 1 angeordnete erste Bördelformeinheit 2, einen ersten Niederhalter 3, eine zur linken Seite der Basisstruktur 1 angeordnete zweite Bördelformeinheit 4 und einen zweiten Niederhalter 5. Mit der Presse können zwei Bauteile B₁ und B₂ gleichzeitig gebördelt werden. Bei den Bauteilen handelt es sich beispielhaft um die rechte Tür B₁ und die linke Tür B₂ eines Personenkraftwagens. Bei derartigen Bauteilen werden ein Außenteil und ein Innenteil des jeweiligen Bauteils durch das Bördeln gefügt, nämlich durch Schaffung einer Falzverbindung.

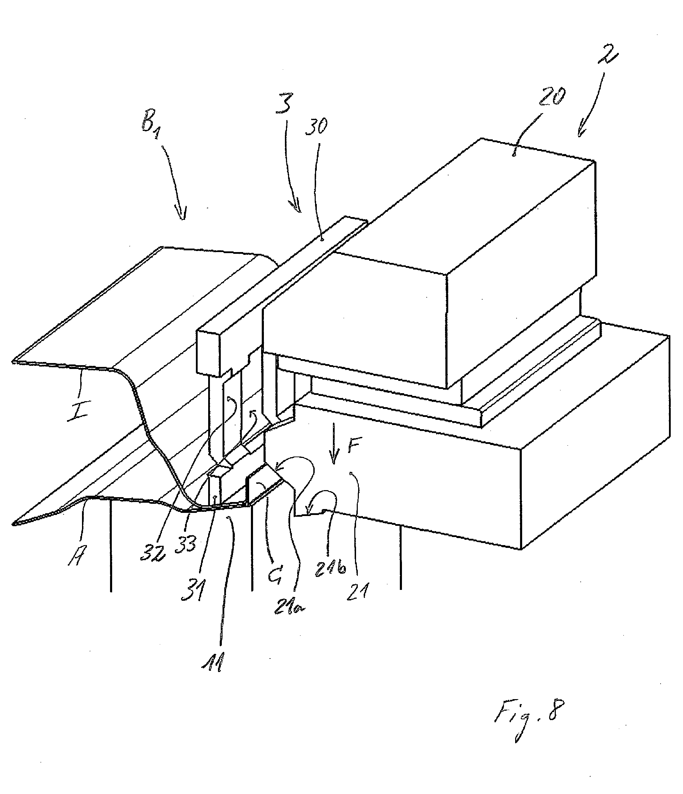

Die Basisstruktur 1 umfasst eine Trägerstruktur 10, an deren rechten Seite, der Bördelformeinheit 2 zugewandt, ein erstes Bördelbett 11 zur Aufnahme des Bauteils B₁ und an deren linken Seite, der Bördelformeinheit 4 zugewandt, ein zweites Bördelbett 12 zur Aufnahme des Bauteils B₂ geformt oder festmontiert ist. Beim Bördeln liegt das Bauteil B₁ im Bördelbett 11 und das Bauteil B₂ im Bördelbett 12, wie beispielsweise in Figur 8 erkennbar ist. Beim Bördeln werden die Bauteile B₁ und B₂ vom jeweils zugeordneten Bördelbett 11 oder 12 abgestützt. Die Bördelbetten 11 und 12 nehmen die beim Bördeln auf das jeweilige Bauteil B₁ und B₂ in Pressrichtung F bzw. in die Gegenrichtung -F wirkende Presskraft auf. Die Basisstruktur 1 umfasst ferner ein Gestell 13, auf dem die Trägerstruktur 10 ruht und das beispielhaft als Standfuß gebildet ist. Die Basisstruktur 1 kann mit dem Gestell 13 auf einem Boden der Produktionsanlage stehend angeordnet werden.

Die Presse ist vertikal stehend ausgerichtet. Dementsprechend weisen die Bördelbetten 11 und 12 zu den Seiten, das Bördelbett 11 nach rechts und das Bördelbett 12 nach links. Die Pressrichtung F ist entsprechend eine horizontale Richtung. Durch die vertikale Aufstellung wird, wie unter anderem Figur 1 verdeutlicht, die Aufstellfläche der Presse im Vergleich zu einer Presse, die wie im Stand der Technik üblich liegend angeordnet ist, so dass die Bördelbetten 11 und 12 nach oben und unten weisen würden, deutlich verringert. Eine erfindungsgemäße Presse für beispielsweise Fahrzeugtüren üblicher Größe benötigt eine Aufstellfläche von weniger als 2 Meter x 2 Meter, vorteilhafterweise von etwa 1.5 Meter x 1.2 Meter, während heutige Pressen zum Bördeln von Fahrzeugtüren aufgrund der horizontalen, liegenden Anordnung des Bördelbetts eine Aufstellfläche von etwa 2.7 Meter x 2. 7 Meter benötigen.

Figur 8 zeigt einen Flanschbereich des Bauteils B₁, in dem im Zusammenwirken von Bördelbett 11 und Bördelformeinheit 2 ein Außenteil A und ein Innenteil I zu einem Bauteil B₁, einer Fahrzeugtür, gefügt werden, indem ein randseitiger Flansch C des Außenteils A umgelegt wird, so dass ein Rand des entsprechend positionierten Innenteils I in eine dadurch geschaffene Falztasche des Außenteils A hineinragt und die Teile A und I durch die so geschaffene Falzverbindung relativ zueinander fixiert sind. Der Niederhalter 3 drückt mit einem freien vorderen Niederhalterrand 31 die beiden Teile A und I in Pressrichtung F in das Bördelbett 11. Die Bördelformeinheit 2 umfasst eine Trägerstruktur 20 und mehrere längs des umzulegenden Flansches C an der Trägerstruktur 20 angeordnete Bördelformen 21, mit denen sie bei einem in Pressrichtung F erfolgenden Presshub gegen den Flansch C drückt und diesen dabei umlegt, wie später noch beschrieben wird.

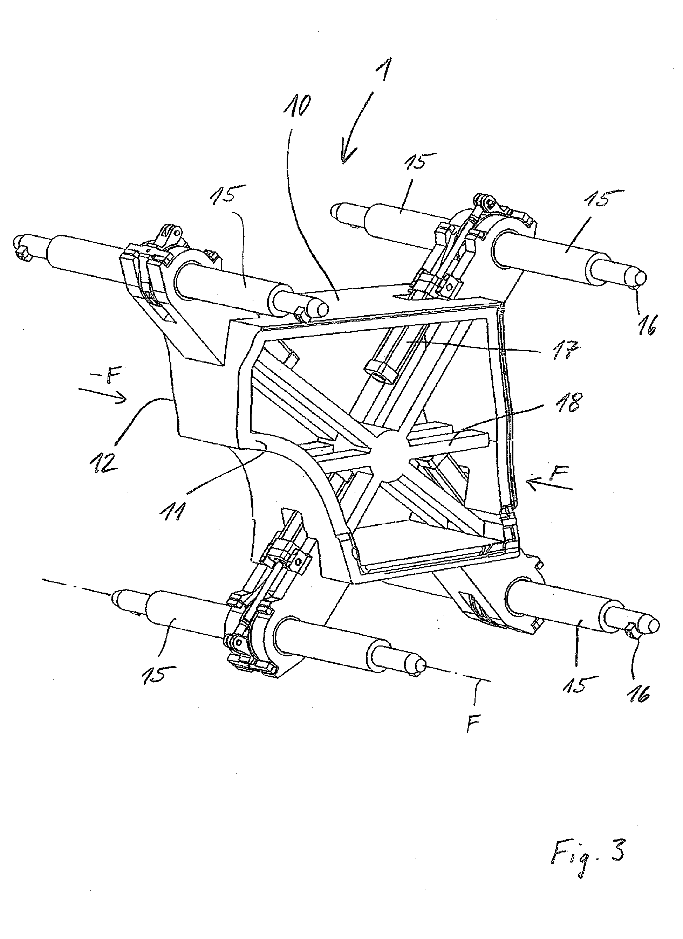

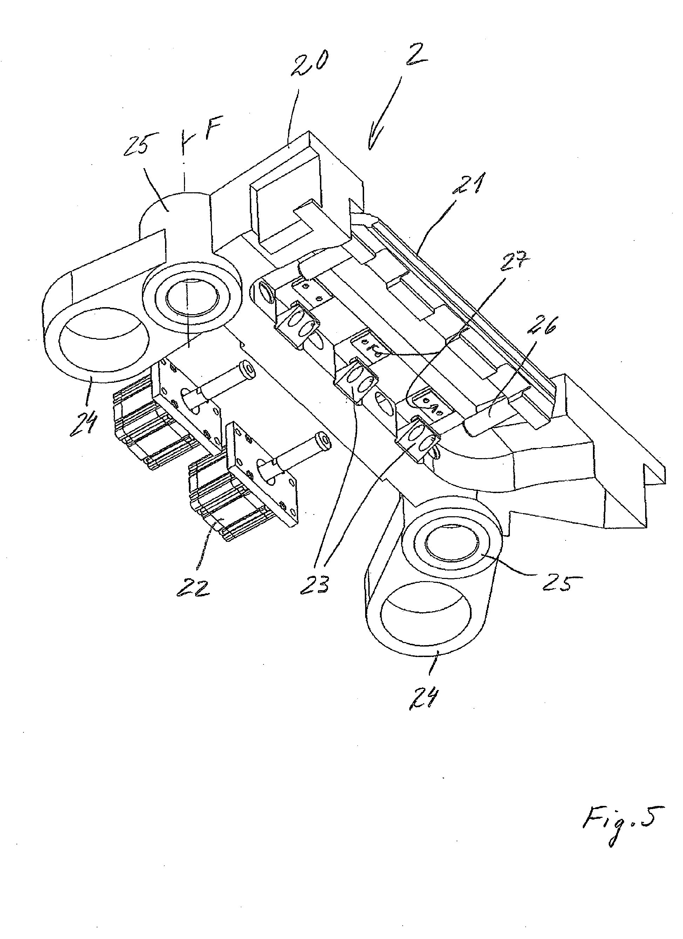

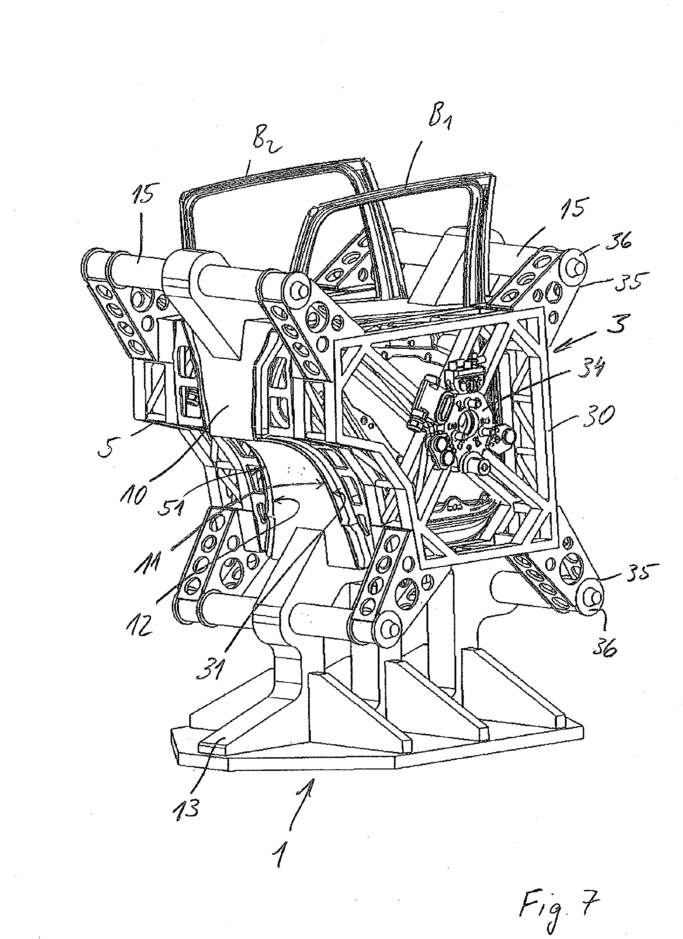

In den Figuren 3, 4 und 6 sind die Hauptkomponenten, die Basisstruktur 1 ohne Gestell 13, die Bördelformeinheit 2 und der Niederhalter 3, einzeln dargestellt. Figur 5 zeigt ferner einen Teil der Bördelformeinheit 2 in einer vergrößerten Darstellung. In Figur 7 ist die Presse wie in Figur 1 mit den aufgenommenen Bauteilen B₁ und B₂ dargestellt. Um das Zusammenspiel der Niederhalter 3 und 5 mit den Bördelbetten 11 und 12 sowie den Bördelformeinheiten 2 und 4 zu illustrieren, ist die Presse ohne die Bördelformeinheiten 2 und 4 dargestellt.

Wie in Figur 3 erkennbar weist die Basisstruktur 1 um die Bördelbetten 11 und 12 verteilt mehrere Führungselemente 15 auf, die sich jeweils in Pressrichtung F erstrecken. Die Pressbewegung ist eine Linearbewegung, entsprechend ist die Pressrichtung F in Figur 3 als Pressachse F eingezeichnet, und die Führungselemente 15 sind entsprechend Geradführungen. Die Führungselemente 15 sind zumindest über den wesentlichen Teil ihrer Länge wie bevorzugt, aber nur beispielhaft, jeweils kreiszylindrisch.

Die Bördelbetten 11 und 12 sind an den beiden voneinander abgewandten Stirnseiten der Trägerstruktur 10 geformt oder als separat geformte Bördelbetten 11 und 12 an der Trägerstruktur 10 montiert. Die Trägerstruktur 10 ist im Ganzen rahmenförmig dem Verlauf der Bördelbetten 11 und 12 nachgebildet.

Die Führungselemente 15 werden von der Trägerstruktur 1, im Beispiel an von der Trägerstruktur 10 abragenden Auslegern, jeweils um eine zur Pressrichtung F parallele Achse, die in Figur 3 ebenfalls mit F bezeichnet ist, drehbar gelagert und sind mittels Spannantrieben 17 motorisch drehantreibbar. Die Führungselemente 15 weisen jeweils nahe bei ihrem freien axialen Ende ein radial abragendes Spannelement 16 auf. Die Spannelemente 16 dienen dazu, die beiden Niederhalter 3 und 5 in die jeweilige Pressrichtung F bzw. -F relativ zum jeweils zugeordnete Bördelbett 11 bzw. 12 zu spannen.

Die Trägerstruktur 10 ist in einem von ihr umrahmten Innenbereich mittels einer Verstärkung 18 ausgesteift. Die Verstärkung 18 wird von mehreren sternförmig vom Zentrum bis zum Innenumfang der Trägerstruktur 10 erstreckten Verstärkungsstegen gebildet, von denen einige über die Trägerstruktur 10 hinaus nach außen verlängert sind, um die genannten Ausleger zu bilden, an denen die Führungselemente 15 angeordnet sind. An den Verstärkungsstegen sind auch die Spannantriebe 17 abgestützt.

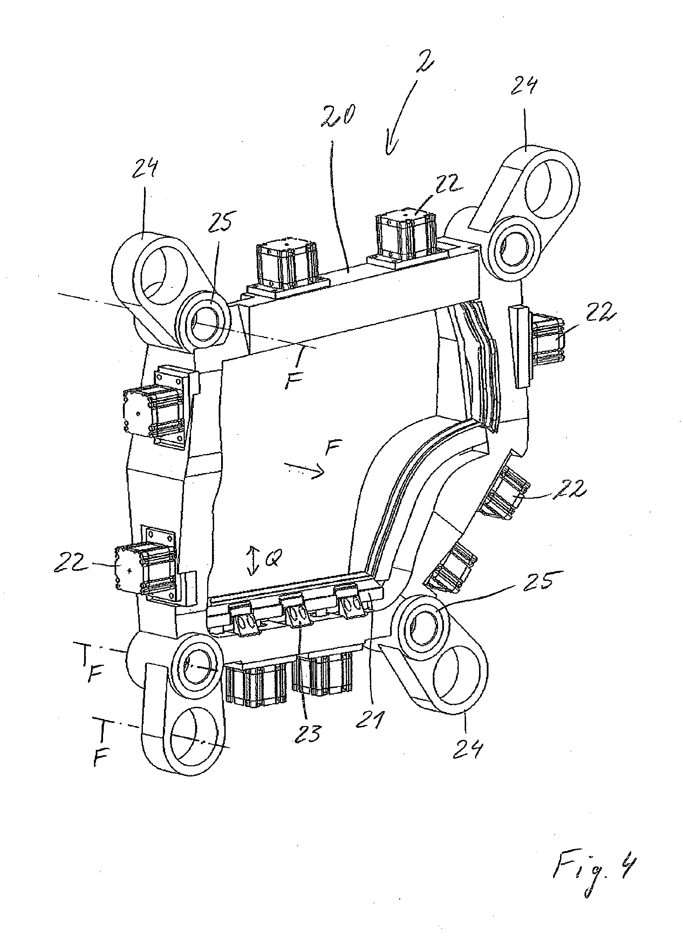

Figur 4 zeigt die Bördelformeinheit 2. Die Bördelformeinheit 2 umfasst eine Trägerstruktur 20, die ebenfalls dem Verlauf des zugeordneten Bördelbetts 11 folgend rahmenartig geformt ist. Die rahmenartige Trägerstruktur 20 umgibt einen zentralen, frei bleibenden Durchgang. Längs des den Durchgang umgebenden Innenumfangs der Trägerstruktur 20 sind mehrere Bördelformen 21 nebeneinander angeordnet. Von den Bördelformen ist nur eine Bördelform 21 dargestellt. Die Bördelformen 21 sind längs des Innenumfangs an der dem Bördelbett 11 zugewandten Seite der Trägerstruktur 20 jeweils in der beispielhaft für die Bördelform 21 dargestellten Weise angeordnet.

Die Bördelformen 21 sind jeweils leistenförmig. Sie sind jeweils gegen die Pressrichtung F unbeweglich an der Trägerstruktur 20 abgestützt, nämlich in einem axialen Anschlagkontakt an einer Stirnfläche der Trägerstruktur 20. Der Anschlagkontakt ist am besten in Figur 5 erkennbar. Zur Ausbildung einer Anschlagfläche 27 sind an der Trägerstruktur 20 mehrere Anschlagstücke befestigt. An der Trägerstruktur 20 sind ferner Stützelemente 23 befestigt, die der Anschlagfläche 27 axial gegenüber liegen. Im montierten Zustand sind die Bördelformen 21 jeweils zwischen der Anschlagfläche 27 und wenigstens einer Stütze 23 axial eingefasst. Die Stützen 23 fangen das beim Bördeln auf die Bördelformen 21 wirkende Drehmoment ab, dienen also als Drehmomentstützen. Die Stützen 23 könnten beispielsweise durch eine in die Trägerstruktur 20 eingearbeitete Nut ersetzt werden.

Die Bördelformen 21 sind relativ zur Trägerstruktur 20 allerdings quer zur Pressrichtung F, in Querrichtung Q, hin und her beweglich. Die Bördelformen 21 sind aufgrund ihrer Verteilung über den Innenumfang der Trägerstruktur 10 in unterschiedliche Querrichtungen Q beweglich, eine Querrichtung Q pro Bördelform 21. Bei der Querbewegung werden sie zwischen den Anschlägen 27 und den Stützen 23 und ferner durch Führungen 26 geradgeführt. In einer Modifikation können entweder die Führungen 26 die Stützen 23 oder die Stützen 23 die Führungen 26 ersetzen. Die Bördelform 21 sind jeweils mit wenigstens einem, im Ausführungsbeispiel mit jeweils zwei Bördelformantrieben 22 gekoppelt, um die Querbewegungen der Bördelformen 21 bewirken zu können. Die Bördelformantriebe 22 sind Linearhubantriebe, beispielhaft pneumatische Antriebe. Die Kopplung ist wie bevorzugt, aber nur beispielhaft, direkt, indem die bewegliche Komponente des jeweiligen Bördelformantriebs 22, im Beispiel der Kolben, in Richtung seiner Beweglichkeit unbeweglich mit der zugeordneten Bördelform 21 verbunden ist.

Die Bördelformeinheit 2 umfasst mehrere Führungsgegenelemente 25, jeweils eines für jedes der Führungselemente 15 der Basisstruktur 1. Die Führungsgegenelemente 25 sind relativ zur Trägerstruktur 20 unbeweglich und können mit dieser in einem Stück geformt oder fest gefügt sein. Die Führungsgegenelemente 25 sind in Anpassung an die Führungselemente 15 als hohlzylindrische Führungen gebildet. In einem Führungseingriff ragen die Führungselemente 15 in Pressrichtung F durch die Führungsgegenelemente 25 und bilden mit diesen einen eng tolerierten Führungseingriff, in dem die Bördelformeinheit 2 relativ zum zugeordneten Bördelbett 11 in Pressrichtung F beim Presshub und beim Rückhub exakt geführt wird.

Die zweite Bördelformeinheit 4 entspricht der Bördelformeinheit 2 in allen hier offenbarten Merkmalen. Die Bördelformeinheiten 2 und 4 unterscheiden sich ebenso wie die Bördelbetten 11 und 12 nur soweit voneinander, als dies durch die Geometrieunterschiede zwischen den Bauteilen B₁ und B₂ erforderlich ist. Die funktionsgleichen Strukturen und Elemente der Bördelformeinheit 4 sind in Figur 2 mit den entsprechenden Bezugsziffern versehen, nämlich 40 für die Trägerstruktur, 41 für die Bördelformen, 42 für die Bördelformantriebe usw., also mit um jeweils die Zahl 20 vergrößerten Bezugszeichen für funktionsgleiche Komponenten.

Die Presse umfasst einen hydraulischen Pressantrieb 14, der in den Figuren 1 und 2 dargestellt ist. Der Pressantrieb 14 wird von mehreren, im Ausführungsbeispiel vier hydraulischen Linearhub-Antriebseinheiten gebildet. Die Antriebseinheiten 14 sind über den äußeren Umfang der Bördelbetten 11 und 12 verteilt angeordnet, so dass die zum Bördeln erforderliche Presskraft über den Verlauf der Bördelbetten 11 und 12 und somit des Flansches C (Figur 8) gleichmäßig verteilt wird. Die Antriebseinheiten 14 umfassen jeweils einen Zylinder und einen im jeweiligen Zylinder geführten Kolben. Von diesen beiden relativ zueinander linear in Pressrichtung F beweglichen Antriebselementen ist jeweils das eine axial unbeweglich mit der Bördelformeinheit 2 und das andere axial unbeweglich mit der Bördelformeinheit 4 verbunden. Bei einer Relativbewegung der Kolben und Zylinder der Antriebseinheiten 14 werden somit die Bördelformeinheiten 2 und 4 entweder in die jeweilige Pressrichtung aufeinander und auf das jeweils zugeordnete Bördelbett 11 oder 12 zu oder voneinander und dem jeweils zugeordneten Bördelbett 11 oder 12 weg bewegt und entsprechend der Presshub- und Rückhub ausgeführt. Die Bördelformeinheiten 2 und 4 können jeweils mittels einer Federeinrichtung vom jeweils zugeordneten Bördelbett 11 bzw. 12 weg in eine Endposition gespannt werden. Der Pressantrieb 14 bewirkt den Presshub der Bördelformeinheiten 2 und 4 in solch einer Antriebsvariante jeweils gegen die rückstellende Federkraft der jeweiligen Federeinrichtung. Anstatt gefedert oder zusätzlich zu einer Federung können die Bördelformeinheiten 2 und 4 auch gedämpft sein. Grundsätzlich sind aber weder eine Feder- noch eine Dämpfungseinrichtung unumgänglich erforderlich.

Die Bördelformeinheiten 2 und 4 weisen Antriebsflansche 24 und 44 auf, nämlich einen Antriebsflansch 24 bzw. 44 pro Antriebseinheit 14. Die Antriebsflansche 24 der Bördelformeinheit 2 sind axial unbeweglich mit einem der beiden Antriebselemente der jeweiligen Antriebseinheit 14 und die Antriebsflansche 44 der Bördelformeinheit 4 sind axial unbeweglich mit jeweils dem anderen Antriebselement der jeweiligen Antriebseinheit 14 verbunden.

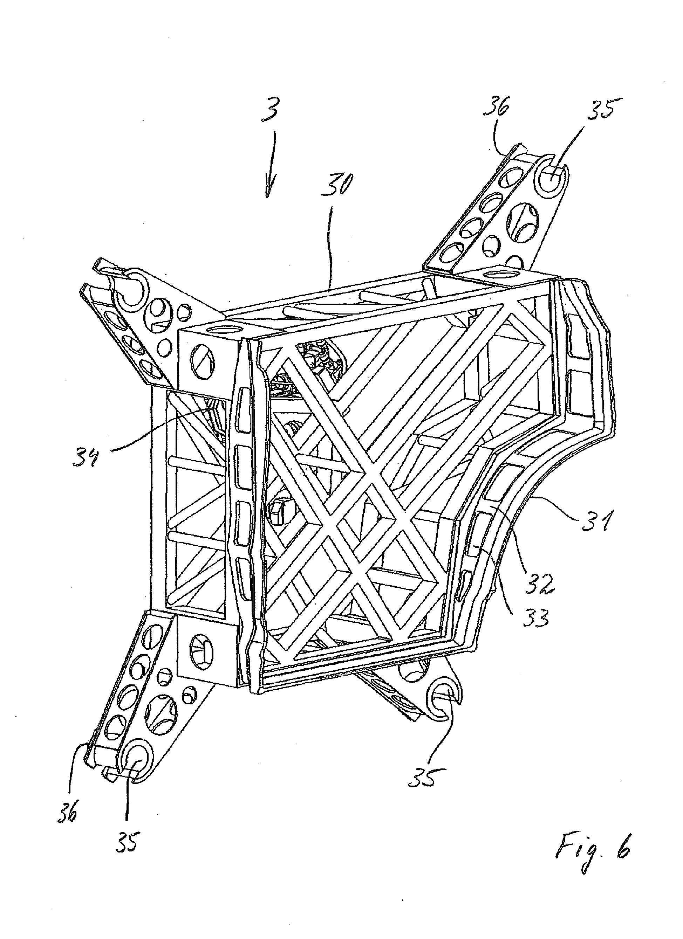

Die Bauteile B₁ und B₂ werden wie bereits kurz anhand der Figur 8 erläutert mittels der Niederhalter 3 und 5 in das jeweilige Bördelbett 11 bzw. 12 gedrückt und dadurch für das Bördeln fixiert. Figur 1 zeigt die Niederhalter 3 und 5 in Ausübung jeweils der Niederhaltefunktion an der Presse. In Figur 6 ist der Niederhalter 3 stellvertretend auch für den Niederhalter 5 alleine, d. h. losgelöst von der Presse, dargestellt. Der Niederhalter 3 umfasst eine Trägerstruktur 30, die wie bevorzugt, aber nur beispielhaft aus Profilblechen oder andersartigen Streben gefügt ist. Im Ganzen gesehen ist die Trägerstruktur 30 ein Fachwerk. Der Niederhalter 3 weist an einer dem Bördelbett 11 zugewandten Seite einen Niederhalterrand 31 auf, mit dem der Niederhalter 3 beim Bördeln gegen das Bauteil B₁ drückt und dieses dadurch im Bördelbett 11 niederhält.

An der beim Bördeln dem Bördelbett 11 abgewandten Seite weist der Niederhalter 3 eine Befestigungseinrichtung 34 auf für eine Befestigung am Ende eines im Raum beweglichen Aktors, vorzugsweise Roboterarms beispielsweise eines Industrieroboters. Die Befestigungseinrichtung 34 kann insbesondere eine Andockeinrichtung für ein automatisches An- und Abdocken am und vom Aktor sein. Die Andockeinrichtung kann über eine Einrichtung zum Befestigen am Aktor auch einen Medienanschluss für beispielsweise die Versorgung des Niederhalters mit elektrischer Energie oder den Anschluss des Niederhalters an eine Druck- oder Saugeinrichtung aufweisen, insbesondere für den Anschluss eines oder mehrerer Sauger, falls ein derartiger Greifer Bestandteil des Niederhalters ist. Der Niederhalter 3 weist ferner eine nicht dargestellte Halteeinrichtung auf, mittels der das jeweilige Bauteil B₁ am Niederhalter 3 gehalten werden kann. Die Halteeinrichtung kann insbesondere einen oder mehrere pneumatische Sauger oder einen oder mehrere mechanische Greifer aufweisen. Der Niederhalter 3 ist dementsprechend dafür eingerichtet, dass jeweilige Bauteil B₁ in einer für das Bördeln geeigneten Position relativ zum Niederhalterrand 31 zu halten und in diesem Zustand mittels des Niederhalters 3 in das Bördelbett 11 einzulegen. Der Niederhalter 3 kann somit die Niederhaltefunktion und eine Einlegefunktion erfüllen, d. h. als Niederhalter- und Einlegewerkzeug dienen. In der Serienproduktion dient er ferner vorzugsweise auch als Aufnahme- bzw. Greifwerkzeug, indem der Roboter mit dem am Roboterarm befestigten Niederhalter 3 das jeweilige Bauteil B₁ aufnimmt zur Presse bewegt und durch den zentralen Durchgang der Bördelformeinheit 2 bis zum Bördelbett 11 führt und das Bauteil B₁ auch gleich in das Bördelbett 11 legt und niederhält. Der Niederhalter 3 bleibt mit seinem Niederhalterrand 31 während des gesamten Bördelprozesses in Druckkontakt mit dem Bauteil B₁. Nach Abschluss des Bördelns wird das Bauteil B₁ mittels des Niederhalters 3 aus dem Bördelbett 11 genommen und in eine Ablagestation transportiert. Der Niederhalter 3 ist anschließend wieder frei für die Aufnahme des nächsten Bauteils B₁.

Um den Roboter beim Einlegen des Bauteils B₁ zu entlasten, weist der Niederhalter 3 über den äußeren Umfang der Trägerstruktur 30 verteilt mehrere Führungsgegenelemente 35 auf, die beim Einlegen des Bauteils B₁ in einem Führungseingriff mit den Führungselementen 15 der Basisstruktur 1 sind. Der Roboter muss den Niederhalter 3 nur in den Führungseingriff mit den Führungselementen 15 bringen, den Niederhalter 3 also mit seinen Führungsgegenelementen 35 in den Führungseingriff mit den Führungselementen 15 einfädeln und anschließend im Führungseingriff in Pressrichtung F bewegen.

Um den Roboter auch von der Funktion des Niederhaltens zu entlasten, ist der Niederhalter 3 mit Spanngegenelementen 36 ausgestattet, die in einem Spanneingriff mit den Spannelementen 16 der Basisstruktur 1 (Figuren 1 und 3) den Niederhalter 3 in Richtung auf das Bördelbett 11 spannen. Die Spannelemente 16 und Spanngegenelemente 36 gelangen am Ende der geführten Einlegebewegung miteinander in den Spanneingriff. Der Spanneingriff ist einem Schraub- bzw. Spindeleingriff ähnlich ausgeführt. Die Spannelemente 16 und Spannegegenelemente 36 wirken zum axialen Spannen wie Schraube und Mutter zusammen. Die Spannelemente 16 und Spanngegenelemente 36 erzeugen im Spanneingriff durch Keilwirkung die zum Niederhalten erforderliche Niederhaltekraft. Die Spannelemente 16 und die Spanngegenelemente 36 wirken gleichzeitig als Verriegelungselemente, indem sie den Niederhalter 3 in der Niederhalteposition sichern. Die Spanngegenelemente 36 sind jeweils an der dem Bördelbett 11 abgewandten Seite des Niederhalters 3 als ein um das Führungsgegenelement 35 verlaufender Gewindegang geformt, steigen also jeweils schraubenförmig in axialer Richtung an. Die auf diese Weise gebildete Spanneinrichtung wirkt ferner wie ein Bajonettverschluss, indem die Führungsgegenelemente 35 jeweils einen axial erstreckten Schlitz aufweisen, durch den beim Einlegen des Bauteils B₁ das jeweilige Spannelement 16 ragt und am Ende der Einlegbewegung wieder austritt, so dass dann die Führungselemente 15 mittels der Spannantriebe 17 verdreht werden können, um im Spanneingriff mit den Spanngegenelementen 36 den Niederhalter 3 axial in Richtung auf das Bördelbett 11 zu spannen.

Die Verhältnisse beim anderen Niederhalter 5 sind die gleichen. Die funktionsgleichen Komponenten des Niederhalters 5 sind im Vergleich zu den jeweils funktionsgleichen Komponenten des Niederhalters 3 um die Zahl 20 erhöht, entsprechend sind dessen Trägerstruktur mit 50, der Niederhalterrand mit 51 etc. bezeichnet.

In Figur 7 sind die Niederhalter 3 und 5 in ihrer Niederhalteposition relativ zum jeweils zugeordneten Bördelbett 11 bzw. 12 dargestellt. Die Bördelformeinheiten 2 und 4 sind lediglich zu Darstellungszwecken weggelassen worden, tatsächlich muss man sich die Bördelformeinheiten 2 und 4 wie in Figur 1 dargestellt hinzudenken.

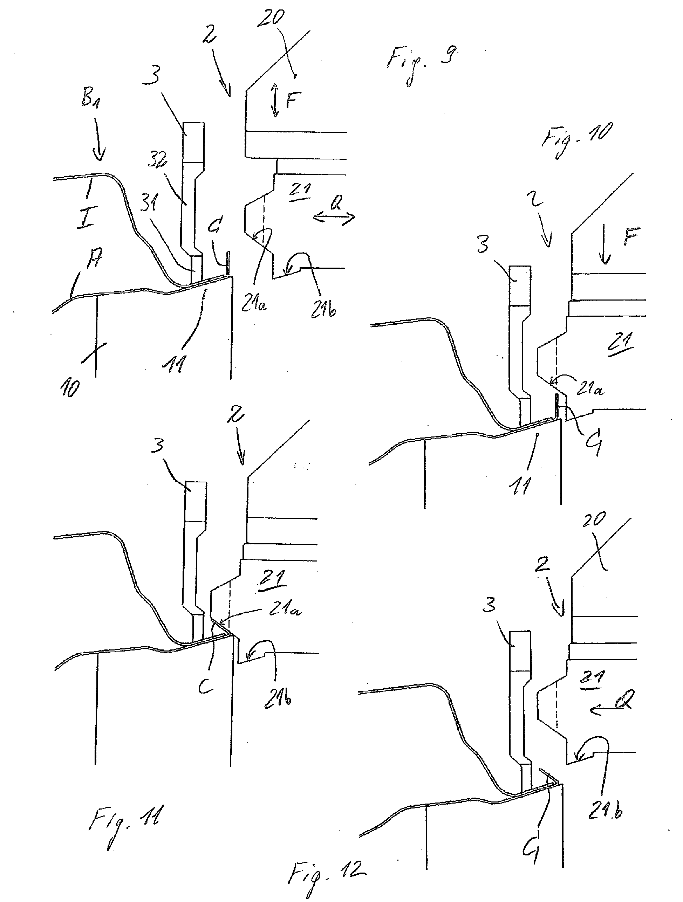

Die Figuren 9 bis 16 veranschaulichen einen zweistufigen Bördelprozess in Form einer Sequenz der Bewegungen der Bördelformeinheit 2 und der daran angeordneten Bördelformen 21.

In Figur 9 befindet sich die Bördelformeinheit 2 in ihrer vom Bördelbett 11 abgerückten Endposition. Die Bördelformeinheiten 21 befinden sich sowohl hinsichtlich der Pressrichtung F als auch der Querrichtung Q in von dem Bördelbett 11 abgerückten Positionen. Die Bördelformen 21 sind wie bereits erläutert gemeinsam mit der Trägerstruktur 20 der Bördelformeinheit 2 in und gegen die Pressrichtung F und relativ zur Trägerstruktur 20 in Querrichtung Q hin und her beweglich, wie dies in Figur 9 durch den jeweils doppelten Richtungspfeil F und Q angedeutet ist. Das Bauteil B₁ ist mittels des Niederhalters 3 in das Bördelbett 11 eingelegt worden, und der Niederhalter 3 drückt mit seinem Niederhalterand 31 längs des Bauteilflansches C den angrenzenden Randbereich des Bauteils B₁, im Ausführungsbeispiel die aufeinander liegenden Randbereiche der Teile A und I aneinander und gemeinsam gegen das Bördelbett 11.

Die Bördelformen 21 sind für ein zweistufiges Bördeln, nämlich ein Vor- und ein Fertigbördeln, eingerichtet, indem sie jeweils eine erste Bördelfläche 21a zum Vorbördeln und eine zweite Bördelfläche 21b zum Fertigbördeln aufweisen. Die Bördelfläche 21a steht in Querrichtung über die Bördelfläche 21b vor.

Der erste Bördelschritt wird durch eine Querbewegung der Bördelformen 21, in Bezug auf die Pressrichtung F radial nach außen, eingeleitet. In Figur 10 ist diese Querbewegung ausgeführt, so dass die Bördelformen 21 jeweils mit ihrer ersten Bördelfläche 21a über dem Flansch C stehen. Aus dieser Position wird die gesamte Bördelformeinheit 2, d. h. die Trägerstruktur 20 gemeinsam mit den daran angeordneten Bördelformen 21, in Pressrichtung F bewegt. Dies ist in Figur 10 durch den Richtungspfeil F angedeutet. Am Ende dieses Presshubs nimmt die gesamte Bördelformeinheit 2 die in Figur 11 dargestellte Position ein. Der Flansch C wird beim Presshub um einen ersten Winkel umgelegt. Anschließend wird die Bördelformeinheit 2 gegen die Pressrichtung F vom Bördelbett 11 wegbewegt, bis sie die in Figur 12 dargestellte Position einnimmt.

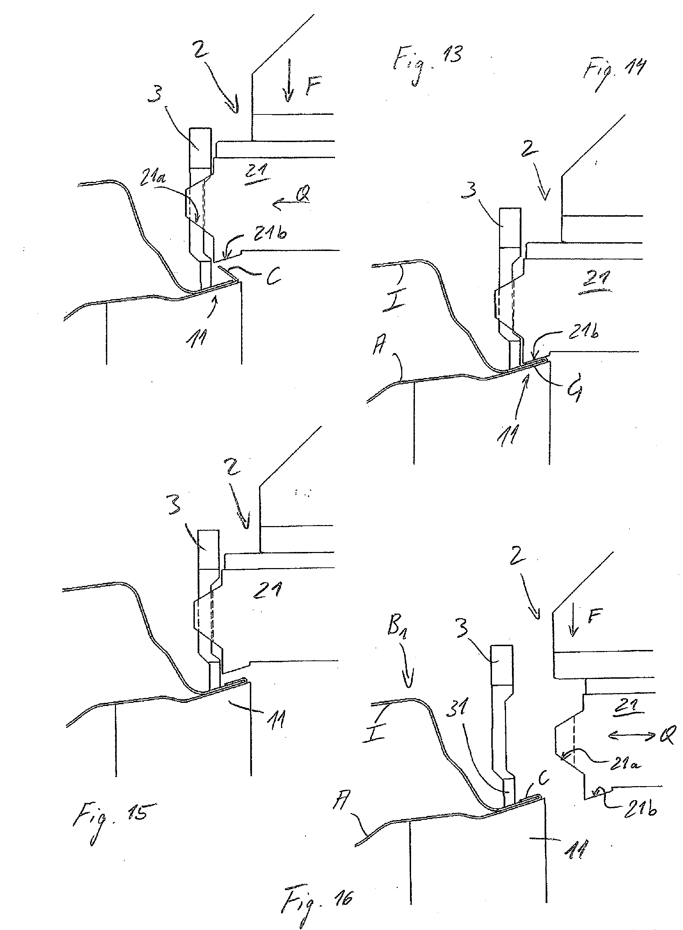

Im Rahmen des nächsten Bördelschritts werden zunächst die Bördelformen 21 aus ihren in Figur 12 eingenommenen Positionen in Querrichtung Q relativ zur Trägerstruktur 20 über das Bördelbett 11 und den teilweise umgelegten Flansch C vorbewegt. Figur 13 zeigt die Anordnung mit den bereits über dem Flansch C befindlichen Bördelformen 21, von denen stellvertretend für die weiteren in sämtlichen Figuren 9 bis 16 nur eine dargestellt ist. Nun wird mit den über dem Flansch C befindlichen Bördelformen 21 wieder die gesamte Bördelformeinheit 2 in Pressrichtung F bewegt. Am Ende dieses zweiten Presshubs nehmen die Bördelformen 21 die in Figur 14 dargestellte Position ein. Der Flansch C wurde durch den Druckkontakt mit der Bördelfläche 21b vollständig umgelegt und dadurch die Falzverbindung hergestellt. Die Bördelformeinheit 2 wird anschließend wieder gegen die Pressrichtung vom Falzbett 11 wegbewegt, bis in die in Figur 15 eingenommene Endposition. Während oder erst nach vollständiger Ausführung des Rückhubs werden die Bördelformen 21 in Querrichtung Q wieder zurückbewegt, so dass das Bauteil B₁ von der Bördelformeinheit 2 frei ist, wie in Figur 16 dargestellt, und mittels des Niederhalters 3 aus dem Bördelbett 11 genommen werden kann.

Noch in dem in Figur 16 dargestellten Zustand, in dem der Niederhalter 3 das bereits durch Bördeln gefügte Bauteil B₁ gegen das Falzbett 11 drückt und dadurch niederhält und ferner die Bördelform 21 oder die mehreren Bördelformen 21 jeweils in Querrichtung Q vom Niederhalter 3 abgerückt sind, kann optional ein zusätzlicher Fügeprozess durchgeführt werden. Der zusätzliche Fügeprozess kann insbesondere dazu dienen, Außenteil A und Innenteil I zusätzlich relativ zueinander zu fixieren. Bei dem zusätzlichen Fügeprozess kann es sich insbesondere um einen Schweißprozess wie etwa ein Punktschweißen bzw. Heftschweißen handeln. Der Niederhalter 3, der mit seinem Niederhalterand 31 nahe beim umgelegten Flansch C gegen das Innenteil I drückt, kann bei dem Schweißen als Masseelektrode dienen. Eine Schweißelektrode, die insbesondere an der Spitze einer schlanken Schweißlanze angeordnet sein kann, kann zwischen der Bördelformeinheit 2 und dem Niederhalter 3 bis gegen den Flansch C bewegt und gegen diesen gedrückt werden, um eine lokale Schweißverbindung herzustellen. Eine Schweißelektrode kann auch integrierter Bestandteil von einer oder mehreren Bördelformen 21 sein. Eine derart integrierte Schweißelektrode kann im Bereich der dem Vorbördeln dienenden Bördelfläche 21a vorzugsweise in Pressrichtung F beweglich angeordnet sein. Die Bördelform(en) 21 würden zum Schweißen mit der jeweiligen Bördelfläche 21a in Querrichtung Q über den Flansch C bewegt und die jeweilige integrierte Schweißelektrode gegen den Flansch C gedrückt werden. Für die Durchführung des Schweißprozesses mit integrierter Schweißelektrode muss die Bördelform 21 nach dem Bördeln auch nicht bis in die abgerückte Position bewegt werden. Es genügt vielmehr, wenn die Bördelform 21 aus der in Figur 15 eingenommenen Position nur mit der Bördelfläche 21 a bis über den Flansch C querbewegt und anschließend entweder nur die bewegliche Schweißelektrode oder die Bördelformeinheit 2 und optional zusätzlich die Schweißelektrode in Pressrichtung F bewegt wird oder jeweils werden. In noch einer Modifikation kann eine Schweißelektrode im Bereich der Bördelfläche 21b für das Fertigbördeln angeordnet sein. In solch einer Modifikation kann unmittelbar im Anschluss an das Fertigbördeln oder direkt am Ende des Presshubs, in der in Figur 14 dargestellten Position, der Schweißprozess durchgeführt werden. Durch die Kontaktierung der Elektroden jeweils an der dem Bördelbett 11 abgewandten Seite der Teile A und I kann eine Fixierung dieser Teile A und I relativ zueinander verstärkt werden.

Damit der Niederhalter 3 über den gesamten Bördelprozess hinweg ständig in der Niederhalteposition verbleiben kann, um das Bauteil B₁ bzw. dessen Teile A und I über den gesamten Bördelprozess am Bördelbett 11 zu fixieren, sind der Niederhalter 3 und die Bördelformen 21 einander angepasst geformt.

In den Figuren 8 bis 16 sind ein Niederhalter 3 und eine der Bördelformen 21 in einer ersten Variante solch einer Anpassung dargestellt. Der Niederhalter 3 der ersten Variante weist in einem an den Niederhalterand 31 angrenzenden Bereich vorstehende Bereiche 32 in Form von Stegen und zurückstehende Bereiche 33 in Form von Durchgängen auf. Die Bördelformen 21 weisen im Bereich in Querrichtung Q ihrer jeweiligen Bördelfläche 21a ebenfalls in Querrichtung Q vorstehende und zurückstehende Bereiche auf, wobei längs des Bördelbetts 11 gesehen jeweils ein vorstehender Bereich 32 des Niederhalters 3 mit einem zurückstehenden Bereich der Bördelform 21 und ein zurückstehender Bereich 33 mit einem vorstehenden Bereich der Bördelform 21 überlappt. Aufgrund dieser Anordnung von vorstehenden und zurückstehenden Bereichen sowohl beim Niederhalter 3 als auch bei den Bördelformen 21 können der Niederhalter 3 und die Bördelformen 21 wie in den Figuren 13, 14 und 15 erkennbar, in Querrichtung Q ineinander greifen, so dass die Bördelformen 21 im Bereich jeweils der ersten Bördelfläche 21 a den Niederhalter 3 im Bereich der zurückstehenden Bereiche 33 durchgreifen. Die Bördelformen 21 können daher beide Bördelschritte trotz der Ausbildung beider Bördelflächen 21a und 21b an jeweils der gleichen Bördelform 21 ausführen und der Niederhalter 3 über den gesamten Bördelprozess hinweg ständig in der Niederhalteposition verbleiben.

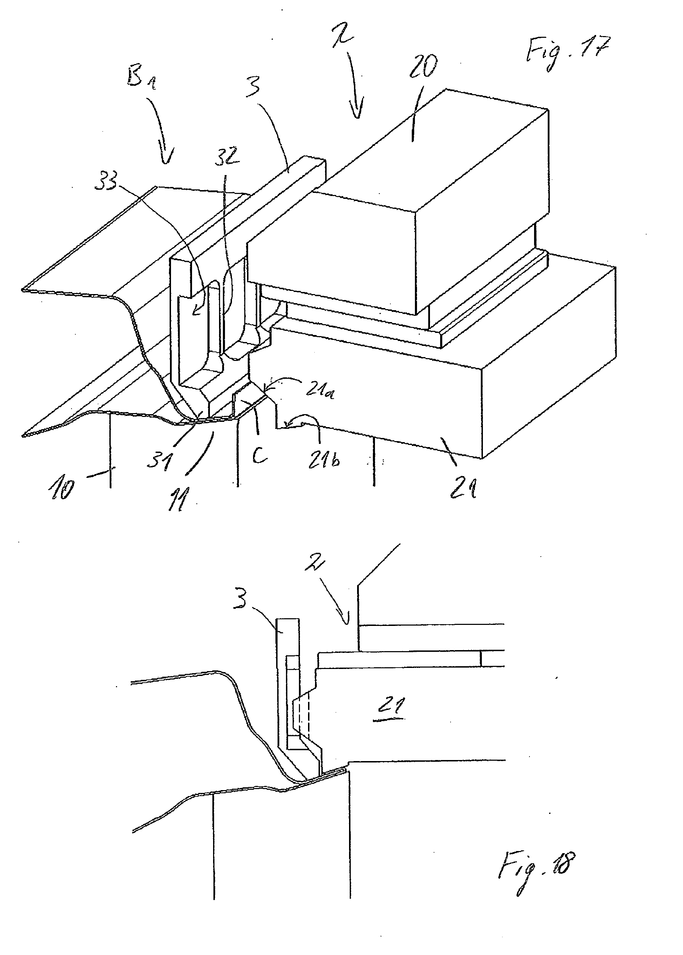

Die Figuren 17 und 18 zeigen einen Niederhalter 3 und eine Bördelformeinheit 2 mit Bördelformen 21 in einer zweiten Variante. Der Niederhalter 3 der zweiten Variante unterscheidet sich vom Niederhalter 3 der ersten Variante nur dadurch, dass die zurückstehenden Bereiche 33 nicht als Durchgänge, sondern als Taschen bzw. Vertiefungen in dem an den Niederhalterand 31 angrenzenden Bereich geformt sind. Die Bördelform 21 durchgreift den Niederhalter 3 daher nicht beim Fertigbördeln, sondern ragt mit ihren vorstehenden Bereichen wie in Figur 18 erkennbar nur in die zurückstehenden Bereiche 33 hinein. Ansonsten entspricht die zweite Variante der ersten.

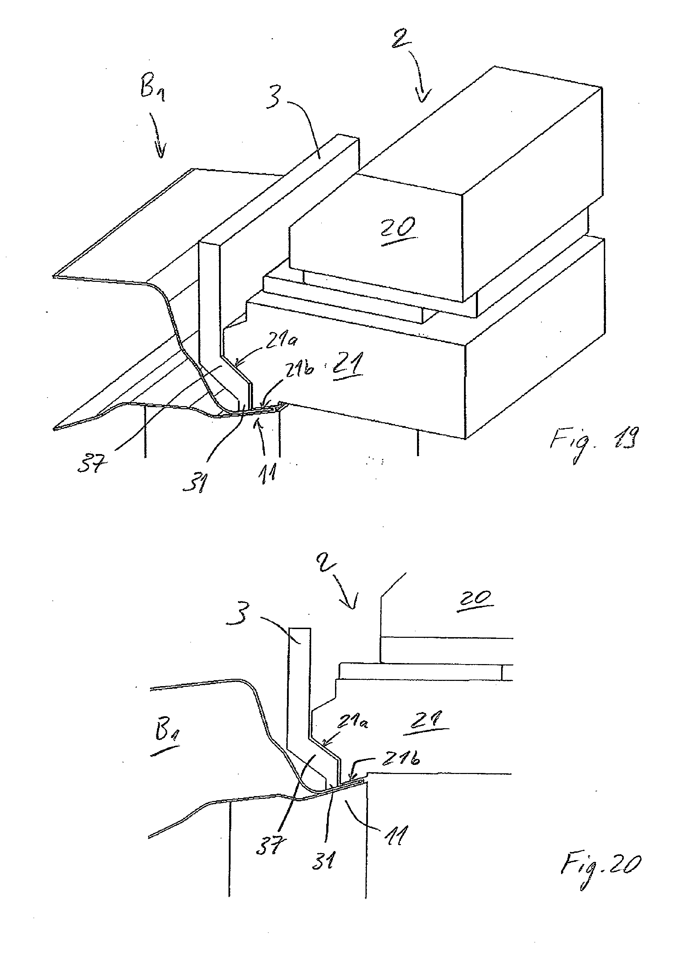

In den Figuren 19 und 20 ist eine Anordnung aus Niederhalter 3 und Bördelformeinheit 2 in einer dritten Variante dargestellt. In der dritten Variante weist der Niederhalter 3 in dem an den Niederhalterand 31 grenzenden Bereich eine Kröpfung 37 auf, die so geformt ist, dass sich der Niederhalter 3 in diesem Bereich in Querrichtung Q von der jeweils gegenüberliegenden Bördelform 21 weg kröpft. Die Bördelformen 21 können daher beim zweiten Bördelschritt mit ihren in Querrichtung vorstehenden Bereichen, in denen jeweils die erste Bördelfläche 21a gebildet ist, über den Niederhalterand 31 vorragen, den Niederhalterand 31 also vom Bördelbett 11 aus gesehen übergreifen. Auch dies ermöglicht ein Bördeln in mehreren Bördelschritten mit jeweils den gleichen Bördelformen 21 und kontinuierlich in der Niederhalteposition befindlichem Niederhalter 3.

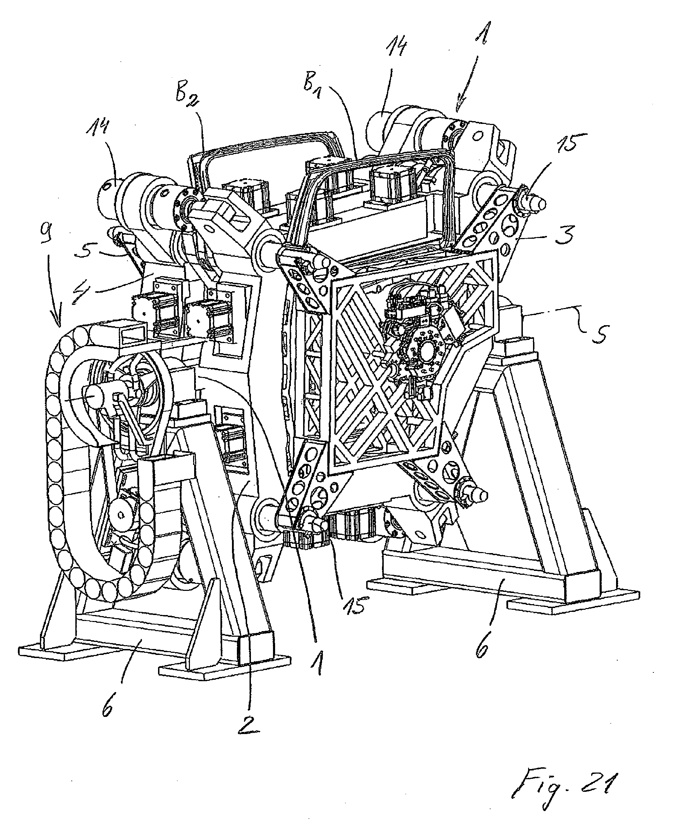

Figur 21 zeigt eine Bördelpresse in einem zweiten Ausführungsbeispiel. Die Bördelpresse ist wieder als Doppelpresse ausgeführt mit einer zentralen Basisstruktur 1, einer ersten Bördelformeinheit 2, einer zweiten Bördelformeinheit 4, einem ersten Niederhalter 3, einem zweiten Niederhalter 5 und einem Pressantrieb 14. Diese Hauptkomponenten der Bördelpresse entsprechen dem ersten Ausführungsbeispiel. Die Bördelpresse ist wie im ersten Ausführungsbeispiel als Doppelpresse in einer Sandwichanordnung gebildet, in der zwei Einfachpressen wie im ersten Ausführungsbeispiel an der zentralen, gemeinsamen Basisstruktur 1 Rücken-an-Rücken angeordnet sind.

Im Unterschied zum ersten Ausführungsbeispiel ist diese Doppelpresse um eine horizontale Achse S schwenkbar in einem stationär angeordneten Gestell 6 gelagert. Im Rahmen der Schwenkbewegung kann die gesamte Presse aus der in Figur 21 eingenommenen stehenden Ausrichtung um die Schwenkachse S in eine horizontale, liegende Ausrichtung geschwenkt werden, in der entweder das Bördelbett 11 oder das Bördelbett 12 nach oben und das andere Bördelbett nach unten weist.

Die Bördelpresse umfasst einen Schwenkantrieb 9, mit dem die Schwenkbewegung bewirkt werden kann. Zum Schwenken ist die Bördelpresse über ihre Basisstruktur 1 im Gestell 6 schwenkbar gelagert. Der Schwenkantrieb 9 umfasst einen Schwenkmotor, der am Gestell 6 abgestützt ist, und einen Zugmitteltrieb, mit dem eine Drehbewegung des Schwenkmotors auf die Basisstruktur 1 und damit auf die gesamte Presse übertragen wird.

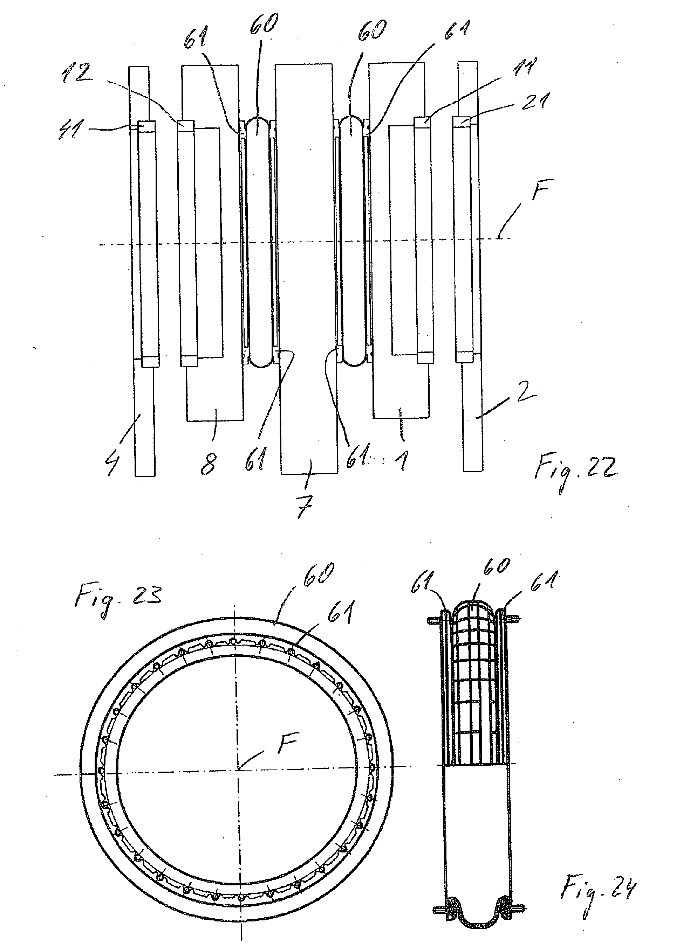

Figur 22 zeigt eine Bördelpresse in einem dritten Ausführungsbeispiel. Auch diese Bördelpresse ist als Doppelpresse gebildet, umfasst also zwei Einfachpressen. Im dritten Ausführungsbeispiel ist der hydraulische Pressantrieb 14 der beiden anderen Ausführungsbeispiele durch einen Druckbalgantrieb ersetzt, der die Pressbewegungen bewirkt. Die Presse umfasst über die bislang beschriebenen Hauptkomponenten hinaus zusätzlich eine zentrale Stützstruktur 7 und eine zweite Basisstruktur 8. Im Unterschied zu den anderen Ausführungsbeispielen führen nicht die Bördelformeinheiten 2 und 4, sondern die Basisstrukturen 1 und 8 und somit deren Bördelbetten 11 und 12 die Pressbewegungen aus, während die Bördelformeinheiten 2 und 4 in Pressrichtung F bzw. -F unbeweglich angeordnet sind.

Die Bördelpresse des dritten Ausführungsbeispiels ist ebenfalls senkrecht stehend ausgerichtet. Zur rechten Seite der Stützstruktur 7 sind die Basisstruktur 1 und die Bördelformeinheit 2 angeordnet, und zur linken Seite die zweite Basisstruktur 8 und die zweite Bördelformeinheit 4. Zwischen der Stützstruktur 7 und der ersten Basisstruktur 1 ist ein erster Druckbalg 60 und zwischen der Stützstruktur 7 und der zweiten Basisstruktur 8 ein zweiter Druckbalg 60 angeordnet, die zusammen den Pressantrieb 60 bilden. Bei Druckbeaufschlagung dehnt sich der erste Druckbalg 60 und bewegt dadurch die Basisstruktur 1 in Richtung auf die Bördelformeinheit 2. Ebenso dehnt sich der zweite Druckbalg 60 bei Druckbeaufschlagung und bewegt dadurch die zweite Basisstruktur 8 in Richtung auf die zweite Bördelformeinheit 4. Von den sich aus dieser Anordnung ergebenden Unterschieden abgesehen können die Basisstrukturen 1 und 8 der Basisstruktur 1 der beiden anderen Ausführungsbeispiele entsprechen, wobei jede der Basisstrukturen 1 und 8 des dritten Ausführungsbeispiels nur jeweils ein Bördelbett 11 bzw. 12 aufweist. Die beiden Einfachpressen 1, 2 und 4, 8 entsprechen von der Umkehr der Kinematik und dem Pressantrieb abgesehen den Einfachpressen der beiden anderen Ausführungsbeispiele.

In einer Modifikation können die beiden Druckbälge 60 durch einen einzigen Druckbalg ersetzt werden. Die zentrale Stützstruktur 7 kann in solch einer Modifikation entfallen. Der nur eine einzige Druckbalg kann allerdings die beiden Basisstrukturen 1 und 8 nur gleichzeitig gegenläufig in Richtung auf die jeweils zugeordnete Bördelformeinheit 2 bzw. 4 bewegen. Den Rückhub würde in solch einer Modifikation eine Rückhubeinrichtung bewirken, beispielsweise eine mechanische oder pneumatische Federeinrichtung oder auch eine elektromotorische Rückhubeinrichtung.

Zur Bördelpresse des dritten Ausführungsbeispiels sei noch nachgetragen, dass die Basisstrukturen 1 und 8 wie in den beiden anderen Ausführungsbeispielen mit Führungselementen vergleichbar den Führungselementen 15 und die Bördelformeinheiten 2 und 4 entsprechend Führungsgegenelemente vergleichbar den Führungsgegenelementen 25 und 45 aufweisen können. Stab- oder lanzenförmige Führungselemente können, wie in den anderen Ausführungsbeispielen ebenfalls, stattdessen auch an den Bördelformeinheiten 2 und 4 oder der Stützstruktur 7 und entsprechende Führungsgegenelemente vergleichbar den Führungsgegenelementen 25 und 45 an den Basisstrukturen 1 und 8 vorgesehen sein.

In den Figuren 23 und 24 ist einer der beiden Druckbälge 60 in einer Draufsicht und in einer Seitenansicht dargestellt. Die Druckbälge 60 umfassen jeweils einen nachgiebigen Balgteil, der mit Druck, vorzugsweise Druckluft, beaufschlagt und im Druck entlastet werden kann, und zwei Lagerstrukturen 61 für die Befestigung an der Stützstruktur 7 und der jeweils zugeordneten Basisstruktur 1 oder 8. Die Lagerstrukturen 61 können ringförmig oder auch vollflächig ausgeführt sein. Die nachgiebigen Balgwände können wie im Ausführungsbeispiel auf nahezu den äußeren Umfang des jeweiligen Balgs 60 beschränkt sein. So können die Lagerstrukturen 61 beispielsweise Kreisscheiben oder an den Verlauf des Bördelbetts 11 oder 12 angepasst geformte Scheiben sein. Die nachgiebige Balgwand kann sich entlang des Umfangsrands der wie in Figur 24 einander beabstandet gegenüberliegenden Lagerstrukturen 61 erstrecken und über den Umfangsrand fluiddicht mit den beiden Lagerstrukturen 61 verbunden sein. Die nachgiebige Balgwand entspricht grob gesehen dem auf einer Felge angeordneten Reifen eines Kraftfahrzeugs. Sind die links und rechts der nachgiebigen Balgwand angeordneten, Strukturen der Bördelpresse, im Ausführungsbeispiel die Basisstrukturen 1 und 8 und die Stützstruktur 7, über die Fläche des jeweiligen Druckbalgs 60 gesehen fluiddicht, können anstelle scheibenförmiger Lagerstrukturen 61 auch ringförmige Lagerstrukturen 61 verwendet werden. Es muss lediglich für eine fluiddichte Verbindung derartiger Lagerstrukturen 61 mit der jeweiligen Pressenstruktur 1, 7, 8 gesorgt werden. Dies kann wie im Ausführungsbeispiel durch eine entlang des Umfangsrands ausreichend dichte Schraubverbindung, optional unter Einschluss einer Dichtung, sichergestellt werden.

### Bezugszeichen:

- 1: Basisstruktur
- 2: Bördelformeinheit
- 3: Niederhalter
- 4: Bördelformeinheit
- 5: Niederhalter
- 6: Gestell
- 7: Stützstruktur
- 8: Basisstruktur
- 9: Schwenkantrieb
- 10: Trägerstruktur
- 11: Bördelbett
- 12: Bördelbett
- 13: Gestell
- 14: Pressantrieb
- 15: Führungselement
- 16: Spannelement
- 17: Spannantrieb
- 18: Verstärkung
- 19: --
- 20: Trägerstruktur
- 21: Bördelform
- 21a: Bördelfläche
- 21b: Bördelfläche
- 22: Bördelformantrieb
- 23: Stütze
- 24: Antriebsflansch
- 25: Führungsgegenelement
- 26: Führung
- 27: Anschlagfläche
- 28: -
- 29: -
- 30: Trägerstruktur
- 31: Niederhalterand
- 32: vorstehender Bereich
- 33: zurückstehende Bereich
- 34: Befestigungseinrichtung
- 35: Führungsgegenelement
- 36: Spanngegenelement
- 37: Kröpfung
- 38: -
- 39: -
- 40: Trägerstruktur
- 41: Bördelform
- 42: Bördelformantrieb
- 44: Antriebsflansch
- 45: Führungsgegenelement
- 50: Trägerstruktur
- 51: Niederhalterand
- 55: Führungsgegenelement
- 60: Balg
- 61: Lagerstruktur

- B1: Bauteil
- B2: Bauteil
- F: Pressrichtung, Pressachse
- Q: Querrichtung
- S: Schwenkachse

## Patentansprüche

1. Bördelpresse zum Umlegen eines Flansches eines Bauteils, vorzugsweise eines Fahrzeugteils, die stationär angeordnet ist und wenigstens folgendes umfasst:
(a) eine Basisstruktur (1) mit einem Bördelbett (11), an welches das Bauteil (B₁) zum Umlegen des Flansches (C) in eine Pressrichtung (F) gepresst werden kann,
(b) eine Bördelformeinheit (2) mit einer Bördelform (21) zum Umlegen des Flansches (C)
(c) und einen Pressantrieb (14) zur Erzeugung einer zum Umlegen auf das Bauteil (B₁) wirkenden Presskraft,
(d) wobei die Bördelform (21) und das Bördelbett (11) mittels des Pressantriebs (14) relativ zueinander in Pressrichtung (F) beweglich sind, um die Presskraft auszuüben,
(e) und wobei die Basisstruktur (1) und die Bördelformeinheit (2) zumindest im Wesentlichen vertikal stehend aufgestellt oder aufstellbar gelagert sind, so dass das Bördelbett (11) in die zumindest im Wesentlichen horizontale Pressrichtung (F) weist,
**dadurch gekennzeichnet, dass**
(f) die Bördelformeinheit (2) einen Durchgang aufweist, durch den das Bauteil (B₁) von einer dem Bördelbett (11) abgewandten Rückseite der Bördelformeinheit (2) aus in das Bördelbett (11) eingelegt werden kann, und die Bördelform (21) an einem Innenumfang des Durchgangs angeordnet ist.

2. Bördelpresse nach dem vorhergehenden Anspruch, ferner wenigstens umfassend:
- ein an der Basisstruktur (1) oder einer optionalen weiteren Basisstruktur (8) vorgesehenes weiteres Bördelbett (12), an das ein weiteres Bauteil (B₂) zum Umlegen eines Flansches des weiteren Bauteils (B₂) in eine der Pressrichtung (F) entgegen gerichtete Pressrichtung (-F) gepresst werden kann,
- eine dem weiteren Bördelbett (12) zugewandte, weitere Bördelformeinheit (4) mit einer weiteren Bördelform (41) zum Umlegen des Flansches des weiteren Bauteils (B₂),
- wobei die Bördelbetten (11, 12) in Pressrichtung (F) zwischen den Bördelformeinheiten (2, 4) angeordnet und
- die weitere Bördelform (41) und das weitere Bördelbett (4) mittels des Pressantriebs (14) relativ zueinander in Pressrichtung (F) beweglich sind, um eine Presskraft auch auf das weitere Bauteil (B₂) auszuüben.

3. Bördelpresse nach einem der vorhergehenden Ansprüche, **dadurch gekennzeichnet, dass** entweder die Bördelformeinheit (2) an der Basisstruktur (1) oder die Basisstruktur (1) an der Bördelformeinheit (2) in Pressrichtung (F) beweglich gelagert ist.

4. Bördelpresse nach einem der vorhergehenden Ansprüche, **dadurch gekennzeichnet, dass** die Basisstruktur (1) und die Bördelformeinheit (2) und dadurch die Bördelform (21) und das Bördelbett (11) mittels des Pressantriebs (14) relativ zueinander in Pressrichtung (F) beweglich sind, um die Presskraft auszuüben, wobei die Bördelform (21) an der Bördelformeinheit (2) in Pressrichtung (F) abgestützt, vorzugsweise in Pressrichtung (F) unbeweglich angeordnet ist.

5. Bördelpresse nach einem der vorhergehenden Ansprüche, **dadurch gekennzeichnet, dass** die Bördelform (21) relativ zur Bördelformeinheit (2) quer zur Pressrichtung (F) beweglich ist und ein Bördelformantrieb (22) mit der Bördelform (21) gekoppelt, vorzugsweise an der Bördelformeinheit (2) angeordnet ist, um die Bördelform (21) quer zur Pressrichtung (F) zu bewegen.

6. Bördelpresse nach einem der vorhergehenden Ansprüche, **dadurch gekennzeichnet, dass** an der Basisstruktur (1) ein in Pressrichtung (F) erstrecktes Führungselement (15) und an der Bördelformeinheit (2) ein in Pressrichtung (F) erstrecktes Führungsgegenelement (25) vorgesehen ist und die Basisstruktur (1) und die Bördelformeinheit (2) mittels eines Führungseingriffs von Führungs- und Führungsgegenelement (15, 25) in Pressrichtung (F) relativ zueinander geführt werden, vorzugsweise linear.

7. Bördelpresse nach einem der vorhergehenden Ansprüche, ferner umfassend einen Niederhalter (3) zum Niederhalten des Bauteils (B₁) beim Falzen, der eine Befestigungseinrichtung (34) für die Befestigung an einem im Raum beweglichen Aktor und eine Halteeinrichtung zum Halten des Bauteils (B₁) aufweist, so dass das Bauteil (B₁) mittels des Niederhalters (3) zur Bördelpresse bewegt und in das Bördelbett (11) gelegt werden kann.

8. Bördelpresse nach dem vorhergehenden Anspruch, **dadurch gekennzeichnet, dass** die Basisstruktur (1) oder die Bördelformeinheit (2) ein Führungselement (15) und der Niederhalter (3) ein Führungsgegenelement (35) aufweist, um den Niederhalter (3) beim Einlegen des Bauteils (B₁) mittels Führungseingriff des Führungselements (15) und des Führungsgegenelements (35) des Niederhalters (3) relativ zu dem Bördelbett (11) zu führen, vorzugsweise in Pressrichtung (F), wobei das Führungselement (15) für den Niederhalter (3) vorzugsweise auch das Führungselement (15) des Anspruchs 7 für die Bördelformeinheit (2) ist.

9. Bördelpresse nach einem der vorhergehenden Ansprüche, **dadurch gekennzeichnet, dass**
- ein Niederhalter (3) zum Niederhalten des Bauteils (B₁) beim Bördeln vorgesehen ist, vorzugsweise ein Niederhalter (3) nach einem der zwei vorhergehenden Ansprüche,
- der Niederhalter (3) einen Niederhalterand (31) zum Kontaktieren des Bauteils (B₁) und einen an den Niederhalterand (31) grenzenden Bereich aufweist,
- der an den Niederhalterand grenzende Bereich des Niederhalters (3) und die wenigstens eine Bördelform (21) so geformt sind, dass die wenigstens eine Bördelform (21) beim Bördeln den Niederhalterand (31) des Niederhalters (5) quer zur Pressrichtung (F) und zum Flansch überlappen kann.

10. Bördelpresse nach dem vorhergehenden Anspruch und wenigstens einem der folgenden Merkmale:
(i) der Niederhalter (3) weist in dem an den Niederhalterand (31) grenzenden Bereich einen quer zur Pressrichtung (F) vorstehenden und einen quer zur Pressrichtung (F) zurückstehenden Bereich (32, 33) und die Bördelform (21) weist ebenfalls einen quer zur Pressrichtung (F) vorstehenden und einen quer zur Pressrichtung (F) zurückstehenden Bereich auf, so dass die Bördelform (21) und der Niederhalter (5) beim Bördeln quer zur Pressrichtung (F) und zum Flansch ineinander greifen können;
(ii) der Niederhalter (3) ist in dem an den Niederhalterand (31)grenzenden Bereich von der Bördelform (21) weggekröpft (37), so dass die Bördelform (2) den Niederhalterand (31) beim Bördeln an seiner Rückseite überlappen kann.

11. Bördelpresse nach einem der vorhergehenden Ansprüche, **dadurch gekennzeichnet, dass** die Basisstruktur (1) oder die Bördelformeinheit (2) ein Spannelement (16) und der Niederhalter (3) ein Spanngegenelement (36) aufweist, die miteinander in einen Spanneingriff bringbar sind, um den Niederhalter (3) zum Niederhalten des Bauteils (B₁) im Spanneingriff relativ zum Bördelbett (11) in Pressrichtung (F) zu spannen.

12. Bördelpresse nach einem der vorhergehenden Ansprüche, **dadurch gekennzeichnet, dass** die Bördelform (21) eine erste Bördelfläche (21a) zum Umlegen des Flansches um einen ersten Winkel und eine zweite Bördelfläche (21b) zum Umlegen des Flansches um einen weiteren Winkel aufweist und die erste Bördelfläche quer zur Pressrichtung (F) über die zweite Bördelfläche in Richtung auf ein freies vorderes Ende der Bördelform (21) hinausragt.

13. Bördelpresse nach einem der vorhergehenden Ansprüche und wenigstens einem der beiden folgenden Merkmale:
(i) mehrere Bördelformen (21) sind längs des Innenumfangs nebeneinander angeordnet;
(ii) die Bördelformeinheit (1) umfasst eine rahmenartige Trägerstruktur (10), die den Durchgang wie ein Rahmen umgibt.

14. Bördelpresse nach einem der vorhergehenden Ansprüche, **dadurch gekennzeichnet, dass** der Pressantrieb (14) einen mit Druckfluid, vorzugsweise Druckluft, beaufschlagbaren Balg (60) umfasst, der bei Druckbeaufschlagung in Pressrichtung (F) auf die Bördelformeinheit (2) oder das Bördelbett (11) wirkt und dadurch die Presskraft erzeugt, wobei der Druckbalg (60) eine quer zur Pressrichtung (F) erstreckte, mit dem Druckfluid beaufschlagbare Balgfläche aufweist, die vorzugsweise so groß ist, dass die zum Bördeln erforderliche Presskraft bei Anschluss des Druckbalgs (60) an eine Druckluftquelle, die Druckluft mit einem Druck von 20 bar oder weniger liefert, durch den Druckbalg (60) aufbringbar ist.

15. Bördelpresse nach einem der vorhergehenden Ansprüche, **dadurch gekennzeichnet, dass** das Bördelbett (11) und die Bördelformeinheit (2) um eine zumindest im Wesentlichen horizontale Achse drehbar oder schwenkbar gelagert sind.

16. Bördelpresse nach einem der vorhergehenden Ansprüche, **dadurch gekennzeichnet, dass** die Bördelform (21) eine keramische Oberfläche aufweist, mit der sie beim Bördeln gegen den Flansch des Bauteils (B₁) drückt, wobei die Bördelform (21) vorzugsweise aus einem keramischen Werkstoff besteht.

17. Verfahren zur Herstellung der Bördelpresse nach einem der vorhergehenden Ansprüche, bei dem:
(a) die Basisstruktur (1) mit endbearbeiteten Führungselementen (15) und
(b) die Bördelformeinheit (2) mit endbearbeiteten Führungsgegenelementen (25) erstellt werden,
(c) die Bördelform (21) an der Bördelformeinheit (2) montiert wird,
(d) die Basisstruktur (1) und die Bördelformeinheit (2) mit der montierten Bördelform (21) durch einen Führungseingriff der Führungselemente (15) und Führungsgegenelemente (25) relativ zueinander ausgerichtet werden
(e) und die Bördelform (21) oder das Bördelbett (11) bei bestehendem Führungseingriff endbearbeitet wird oder werden
(f) und optional auch der Niederhalter (3) in einem Führungseingriff mit Führungselementen (15) der Basisstruktur (1) oder der Bördelformeinheit (2), vorzugsweise in einem Führungseingriff mit den Führungselementen (15) des Merkmals (a), endbearbeitet wird.

## Claims

1. A flanging press for folding over a flange of a component, preferably a vehicle part, wherein the flanging press is arranged in a stationary manner and comprises at least:
(a) a base structure (1) featuring a flanging bed (11) onto which the component (B₁) can be pressed in a pressing direction (F) in order to fold over the flange (C);
(b) a flanging die unit (2) featuring a flanging die (21) for folding over the flange (C);
(c) and a pressing drive (14) for generating a pressing force which acts on the component (B₁) for the purpose of folding over,
(d) wherein the flanging die (21) and the flanging bed (11) can be moved relative to each other in the pressing direction (F) by means of the pressing drive (14) in order to exert the pressing force,
(e) and wherein the base structure (1) and the flanging die unit (2) are at least substantially installed vertically upright or mounted such that they can be installed vertically upright, such that the flanging bed (11) points in the pressing direction (F) which is at least substantially horizontal,
**characterised in that**
(f) the flanging die unit (2) comprises a passage through which the component (B₁) can be inserted into the flanging bed (11) from a rear side of the flanging die unit (2) which faces away from the flanging bed (11), and the flanging die (21) is arranged on an inner circumference of the passage.

2. The flanging press according to the preceding claim, further comprising at least:
- an additional flanging bed (12) which is provided on the base structure (1) or on an optional additional base structure (8) and onto which an additional component (B₂) can be pressed in a pressing direction (-F) which is opposite to the pressing direction (F) in order to fold over a flange of the additional component (B₂);
- an additional flanging die unit (4) which faces the additional flanging bed (12) and comprises an additional flanging die (41) for folding over the flange of the additional component (B₂),
- wherein the flanging beds (11, 12) are arranged between the flanging die units (2, 4) in the pressing direction (F) and
- the additional flanging die (41) and the additional flanging bed (12) can be moved relative to each other in the pressing direction (F) by means of the pressing drive (14), in order to also exert a pressing force on the additional component (B₂).

3. The flanging press according to any one of the preceding claims, **characterised in that** either the flanging die unit (2) is mounted on the base structure (1) such that it can be moved in the pressing direction (F) or the base structure (1) is mounted on the flanging die unit (2) such that it can be moved in the pressing direction (F).

4. The flanging press according to any one of the preceding claims, **characterised in that** the base structure (1) and the flanging die unit (2) and therefore the flanging die (21) and the flanging bed (11) can be moved relative to each other in the pressing direction (F) by means of the pressing drive (14), in order to exert the pressing force, wherein the flanging die (21) is supported in the pressing direction (F) on the flanging die unit (2), preferably arranged such that it cannot be moved in the pressing direction (F).

5. The flanging press according to any one of the preceding claims, **characterised in that** the flanging die (21) can be moved relative to the flanging die unit (2) transverse to the pressing direction (F), and a flanging die drive (22) is coupled to the flanging die (21), preferably arranged on the flanging die unit (2), in order to move the flanging die (21) transverse to the pressing direction (F).

6. The flanging press according to any one of the preceding claims, **characterised in that** a guiding element (15) which extends in the pressing direction (F) is provided on the base structure (1), and a guiding counter element (25) which extends in the pressing direction (F) is provided on the flanging die unit (2), and the base structure (1) and the flanging die unit (2) are guided relative to each other in the pressing direction (F), preferably linearly, by means of a guiding engagement between the guiding element (15) and guiding counter element (25).

7. The flanging press according to any one of the preceding claims, further comprising a suppressor (3) for holding down the component (B₁) during hemming, said suppressor (3) comprising a fastening device (34) for fastening to an actuator which can be spatially moved, and a holding device for holding the component (B₁), such that the component (B₁) can be moved to the flanging press and placed into the flanging bed (11) by means of the suppressor (3).

8. The flanging press according to the preceding claim, **characterised in that** the base structure (1) or the flanging die unit (2) comprises a guiding element (15) and the suppressor (3) comprises a guiding counter element (35) in order to guide the suppressor (3), preferably in the pressing direction (F), relative to the flanging bed (11) by means of a guiding engagement between the guiding element (15) and the guiding counter element (35) of the suppressor (3) while it is inserting the component (B₁), wherein the guiding element (15) for the suppressor (3) is preferably also the guiding element (15) of Claim 6 for the flanging die unit (2).

9. The flanging press according to any one of the preceding claims, **characterised in that**:
- a suppressor (3), preferably a suppressor (3) according to any one of the preceding two claims, is provided for holding down the component (B₁) during flanging;
- the suppressor (3) comprises a holding-down edge (31) for contacting the component (B₁), and a region which borders the holding-down edge (31); and
- the region of the suppressor (3) which borders the holding-down edge, and the at least one flanging die (21), are shaped such that the at least one flanging die (21) can overlap the holding-down edge (31) of the suppressor (3) transverse to the pressing direction (F) and transverse to the flange during flanging.

10. The flanging press according to the preceding claim and at least one of the following features:
(i) in the region which borders the holding-down edge (31), the suppressor (3) comprises a region (32) which protrudes transverse to the pressing direction (F) and a region (33) which is retracted transverse to the pressing direction (F), and the flanging die (21) similarly comprises a region which protrudes transverse to the pressing direction (F) and a region which is retracted transverse to the pressing direction (F), such that the flanging die (21) and the suppressor (3) can interlock transverse to the pressing direction (F) and to the flange during flanging;
(ii) the suppressor (3) is angled away (37) from the flanging die (21) in the region which borders the holding-down edge (31), such that the flanging die (21) can overlap the holding-down edge (31) on its rear side during flanging.

11. The flanging press according to any one of the preceding claims, **characterised in that** the base structure (1) or the flanging die unit (2) comprises a tensing element (16), and the suppressor (3) comprises a tensing counter element (36), which can be brought into tensing engagement with each other in order to tense the suppressor (3) in the pressing direction (F) relative to the flanging bed (11), for holding down the component (B₁) in the tensing engagement.

12. The flanging press according to any one of the preceding claims, **characterised in that** the flanging die (21) comprises a first flanging area (21a) for folding over the flange by a first angle and a second flanging area (21b) for folding over the flange by another angle, and the first flanging area protrudes beyond the second flanging area transverse to the pressing direction (F) towards a free front end of the flanging die (21).

13. The flanging press according to any one of the preceding claims and at least one of the following two features:
(i) multiple flanging dies (21) are arranged next to each other along the inner circumference;
(ii) the flanging die unit (2) comprises a frame-like bearing structure (20) which surrounds the passage in the manner of a frame.

14. The flanging press according to any one of the preceding claims, **characterised in that** the pressing drive (14) comprises a bellows (60) which can be charged with pressure fluid, preferably pressurised air, and which acts on the flanging die unit (2) or the flanging bed (11) when charged with pressure in the pressing direction (F) and thus generates the pressing force, wherein the pressure bellows (60) comprises a bellows area which extends transverse to the pressing direction (F) and can be charged with the pressure fluid and is preferably large enough that the pressing force necessary for flanging can be applied through the pressure bellows (60) when the pressure bellows (60) is connected to a pressurised air source which delivers pressurised air at a pressure of 20 bars or less.

15. The flanging press according to any one of the preceding claims, **characterised in that** the flanging bed (11) and the flanging die unit (2) are mounted such that they can be rotated or pivoted about an axis which is at least substantially horizontal.

16. The flanging press according to any one of the preceding claims, **characterised in that** the flanging die (21) comprises a ceramic surface via which it presses against the flange of the component (B₁) during flanging, wherein the flanging die (21) preferably consists of a ceramic material.

17. A method for manufacturing the flanging press according to any one of the preceding claims, wherein:
(a) the base structure (1) comprising finished guiding elements (15) and
(b) the flanging die unit (2) comprising finished guiding counter elements (25) are prepared;
(c) the flanging die (21) is assembled on the flanging die unit (2);
(d) the base structure (1) and the flanging die unit (2) with the flanging die (21) assembled are aligned relative to each other by a guiding engagement between the guiding elements (15) and the guiding counter elements (25);
(e) and the flanging die (21) or the flanging bed (11) is/are finished while the guiding engagement is in effect
(f) and the suppressor (3) is optionally also finished in a guiding engagement with guiding elements (15) of the base structure (1) or flanging die unit (2), preferably in a guiding engagement with the guiding elements (15) of Feature (a).

## Revendications

1. Presse à border pour rabattre un rebord d'un composant, de préférence une pièce de véhicule, laquelle presse à border est agencée de manière fixe et comporte au moins les éléments suivants :
(a) une structure de base (1) ayant un lit de bordage (11) sur lequel le composant (B₁) peut être pressé dans une direction de pression (F) pour rabattre le rebord (C),
(b) une unité de matrice de bordage (2) pourvue d'une matrice de bordage (21) pour rabattre le rebord (C),
(c) et un entraînement de presse (14) pour générer une force de pression agissant sur le composant (B₁) afin de le rabattre,
(d) dans laquelle la matrice de bordage (21) et le lit de bordage (11) peuvent être déplacés l'un par rapport à l'autre dans la direction de pression (F) au moyen de l'entraînement de presse (14), afin d'exercer la force de pression,
(e) et dans laquelle la structure de base (1) et l'unité de matrice de bordage (2) sont montées dressées ou pouvant être dressées de manière sensiblement verticale, de telle sorte que le lit de bordage (11) pointe dans la direction de pression (F) au moins sensiblement horizontale,
**caractérisée en ce que**
(f) l'unité de matrice de bordage (2) comporte un passage à travers lequel le composant (B₁) peut être inséré dans le lit de bordage (11) à partir d'un côté arrière de l'unité de matrice de bordage (2) opposé au lit de bordage (11) , et la matrice de bordage (21) est agencée sur une circonférence intérieure du passage.

2. Presse à border selon la revendication précédente, comportant en outre au moins :
- un lit de bordage supplémentaire (12) prévu sur la structure de base (1) ou sur une structure de base supplémentaire facultative (8), sur lequel un composant supplémentaire (B₂) peut être pressé dans une direction de pression (-F) opposée à la direction de pression (F) afin de rabattre un rebord du composant supplémentaire (B₂),
- une unité de matrice de bordage supplémentaire (4), dirigée vers le lit de bordage supplémentaire (12), comportant une matrice de bordage supplémentaire (41) pour rabattre le rebord du composant supplémentaire (B₂),
- dans laquelle les lits de bordage (11, 12) sont agencés dans la direction de pression (F) entre les unités de matrice de bordage (2, 4), et
- la matrice de bordage supplémentaire (41) et le lit de bordage supplémentaire (4) peuvent être déplacés l'un par rapport à l'autre dans la direction de pression (F) au moyen de l'entraînement de presse (14), afin d'exercer une force de pression également sur le composant supplémentaire (B₂).

3. Presse à border selon l'une des revendications précédentes, **caractérisée en ce que** soit l'unité de matrice de bordage (2) est montée sur la structure de base (1) de manière mobile dans la direction de pression (F), soit la structure de base (1) est montée sur l'unité de matrice de bordage (2) de manière mobile dans la direction de pression (F).

4. Presse à border selon l'une des revendications précédentes, **caractérisée en ce que** la structure de base (1) et l'unité de matrice de bordage (2), et ainsi la matrice de bordage (21) et le lit de bordage (11), peuvent être déplacés l'un par rapport à l'autre dans la direction de pression (F) au moyen de l'entraînement de presse (14), afin d'exercer la force de pression, dans laquelle la matrice de bordage (21) est supportée par l'unité de matrice de bordage (2) dans la direction de pression (F), et est de préférence agencée de manière fixe dans la direction de pression (F).

5. Presse à border selon l'une des revendications précédentes, **caractérisée en ce que** la matrice de bordage (21) peut être déplacée par rapport à l'unité de matrice de bordage (2) transversalement à la direction de pression (F), et relie un entraînement de matrice de bordage (22) à la matrice de bordage (21), et est de préférence agencée sur l'unité de matrice de bordage (2), afin de déplacer la matrice de bordage (21) transversalement à la direction de pression (F).

6. Presse à border selon l'une des revendications précédentes, **caractérisée en ce que** sur la structure de base (1) est prévu un élément de guidage (15) s'étendant dans la direction de pression (F) et sur l'unité de matrice de formage (2) est prévu un élément de guidage complémentaire (25) s'étendant dans la direction de pression (F), et la structure de base (1) et l'unité de matrice de bordage (2) sont guidées l'une par rapport à l'autre, de préférence linéairement, dans la direction de pression (F) au moyen d'une prise de guidage de l'élément de guidage et de l'élément de guidage complémentaire (15, 25).

7. Presse à border selon l'une des revendications précédentes, comportant en outre un serre-flan (3) pour serrer les flans du composant (B₁) lors du pliage, lequel serre-flan comporte un dispositif de fixation (34) pour la fixation à un actionneur mobile dans l'espace et un dispositif de retenue pour retenir le composant (B₁), de telle sorte que le composant (B₁) peut être déplacé vers la presse à border au moyen du serre-flan (3) et peut être monté dans le lit de bordage (11).

8. Presse à border selon la revendication précédente, **caractérisée en ce que** la structure de base (1) ou l'unité de matrice de bordage (2) comporte un élément de guidage (15) et le serre-flan (3) comporte un élément de guidage complémentaire (35) afin de guider le serre-flan (3), de préférence dans la direction de pression (F), par rapport au lit de bordage (11) lors de l'insertion du composant (B₁) au moyen de la prise de guidage de l'élément de guidage (15) et de l'élément de guidage complémentaire (35) du serre-flan (3), dans laquelle l'élément de guidage (15) est destiné au serre-flan (3) et de préférence l'élément de guidage (15) de la revendication 7 est également destiné à l'unité de matrice de formage (2).

9. Presse à border selon l'une des revendications précédentes, **caractérisée en ce que** :
- un serre-flan (3) est prévu pour serrer le composant (B₁) lors du bordage, de préférence un serre-flan (3) selon l'une des deux revendications précédentes,
- le serre-flan (3) comporte un bord de serre-flan (31) pour venir en contact avec le composant (B₁), et une zone bordant le rebord de serre-flan (31),
- la zone bordant le rebord de serre-flan du serre-flan (3) et la au moins une matrice de bordage (21) sont formées de telle sorte que la au moins une matrice de bordage (21) peut chevaucher le rebord lors du bordage du bord de serre-flan (31) du serre-flan (3) transversalement à la direction de pression (F).

10. Presse à border selon la revendication précédente et présentant au moins l'une des caractéristiques suivantes :
(i) le serre-flan (3) comporte, dans la zone bordant le bord de serre-flan (31), une zone (32, 33) faisant saillie transversalement à la direction de pression (F) et une zone en retrait transversalement à la direction de pression (F), et la matrice de bordage (21) comporte également une zone faisant saillie transversalement à la direction de pression (F) et une zone en retrait transversalement à la direction de pression (F), de telle sorte que la matrice de bordage (21) et le serre-flan (3) peuvent venir en prise l'un dans l'autre lors du bordage transversalement à la direction de pression (F) et jusqu'au rebord,
(ii) le serre-flan (3) est coudé (37) dans la zone de la matrice de bordage (21) bordant le rebord de serre-flan (31), de telle sorte que la matrice de bordage (2) peut chevaucher le rebord de serre-flan (31) lors du bordage sur son côté arrière.

11. Presse à border selon l'une des revendications précédentes, **caractérisée en ce que** la structure de base (1) ou l'unité de matrice de bordage (2) comportent un élément de serrage (16) et le serre-flan (3) comporte un élément de serrage complémentaire (36), qui peuvent venir en prise serrée l'un avec l'autre afin de serrer le serre-flan (3) pour serrer le composant (B₁) en prise serrée par rapport au lit de bordage (11) dans la direction de pression (F).

12. Presse à border selon l'une des revendications précédentes, **caractérisée en ce que** la matrice de bordage (21) comporte une première surface de bordage (21a) pour rabattre le rebord d'un premier angle, et une seconde surface de bordage (21b) pour rabattre le rebord d'un angle supplémentaire, et la première surface de bordage fait saillie transversalement à la direction de pression (F) au-dessus de la seconde surface de bordage en direction d'une extrémité avant libre de la matrice de bordage (21).

13. Presse à border selon l'une des revendications précédentes et présentant au moins l'une des deux caractéristiques suivantes :
(i) plusieurs matrices de bordage (21) sont agencées les unes à côté des autres le long de la circonférence intérieure,
(ii) l'unité de matrice de bordage (1) inclut une structure de support en forme de cadre (10), qui entoure le passage à la manière d'un cadre.

14. Presse à border selon l'une des revendications précédentes, **caractérisée en ce que** l'entraînement de presse (14) inclut un soufflet (60) auquel peut être appliqué un fluide sous pression, de préférence de l'air comprimé, lequel soufflet agit sur l'unité de matrice de bordage (2) ou sur le lit de bordage (11) lors de l'application d'une pression dans la direction de pression (F), et génère ainsi la force de pression, dans laquelle le soufflet de pression (60) comporte une surface de soufflet à laquelle peut être appliqué le fluide sous pression et qui s'étend transversalement à la direction de pression (F), laquelle surface de soufflet est de préférence suffisamment grande pour que la force de pression requise pour le bordage puisse être appliquée par l'intermédiaire du soufflet de pression (60) en raccordant le soufflet de pression (60) à une source d'air comprimé qui fournit de l'air comprimé à une pression de 20 bar ou moins.

15. Presse à border selon l'une des revendications précédentes, **caractérisée en ce que** le lit de bordage (11) et l'unité de matrice de bordage (2) sont montés de manière à pouvoir tourner ou pivoter autour d'un axe au moins sensiblement horizontal.

16. Presse à border selon l'une des revendications précédentes, **caractérisée en ce que** la matrice de bordage (21) comporte une surface en céramique avec laquelle elle exerce une pression contre le rebord du composant (B₁) lors du bordage, dans laquelle la matrice de bordage (21) est de préférence constituée d'une céramique.

17. Procédé pour fabriquer la presse à border selon l'une des revendications précédentes, comportant les étapes consistant à :
(a) fabriquer la structure de base (1) avec des éléments de guidage finis (15) et
(b) fabriquer l'unité de matrice de bordage (2) avec des éléments de guidage complémentaires finis (25),
(c) monter la matrice de bordage (21) sur l'unité de matrice de bordage (2),
(d) orienter l'une par rapport à l'autre la structure de base (1) et l'unité de matrice de bordage (2) avec la matrice de bordage (21) montée par une prise de guidage des éléments de guidage (15) et des éléments de guidage complémentaires (25),
(e) et finir la matrice de bordage (21) ou le lit de bordage (11) lorsque la prise de guidage est établie,
(f) et facultativement finir également le serre-flan (3) en une prise de guidage avec des éléments de guidage (15) de la structure de base (1) ou de l'unité de matrice de formage (2), de préférence en une prise de guidage avec les éléments de guidage (15) de la caractéristique (a).
